(19) Europäisches Patentamt
European Patent Office
Office européen des brevets

(11) **EP 4 316 806 A1**

(12) **EUROPEAN PATENT APPLICATION**
published in accordance with Art. 153(4) EPC

(43) Date of publication:
**07.02.2024 Bulletin 2024/06**

(21) Application number: **22780375.6**

(22) Date of filing: **23.03.2022**

(51) International Patent Classification (IPC):
**B32B 9/00** (2006.01)   **C03C 17/22** (2006.01)
**C03C 17/25** (2006.01)   **C09D 183/02** (2006.01)
**C09D 183/04** (2006.01)   **C09D 201/00** (2006.01)
**C09D 7/20** (2018.01)   **C09D 7/61** (2018.01)
**C09D 7/63** (2018.01)   **C09D 7/65** (2018.01)
**C09D 1/00** (2006.01)

(52) Cooperative Patent Classification (CPC):
**B32B 9/00; C03C 17/22; C03C 17/25; C09D 1/00;
C09D 7/20; C09D 7/61; C09D 7/63; C09D 7/65;
C09D 183/02; C09D 183/04; C09D 201/00**

(86) International application number:
**PCT/JP2022/013487**

(87) International publication number:
**WO 2022/210160 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021   JP 2021060390
09.09.2021   JP 2021146576**

(71) Applicant: **Sumitomo Chemical Company Limited
Tokyo 103-6020 (JP)**

(72) Inventors:
• **ISHIYAMA, Takeshi
  Ichihara-shi, Chiba 299-0195 (JP)**
• **SANJO, Haruhiko
  Ichihara-shi, Chiba 299-0195 (JP)**
• **HAMAMOTO, Toshimasa
  Ichihara-shi, Chiba 299-0195 (JP)**

(74) Representative: **Vossius & Partner
Patentanwälte Rechtsanwälte mbB
Siebertstrasse 3
81675 München (DE)**

(54) **INORGANIC FINE PARTICLE DISPERSION**

(57)   Provided is an inorganic fine particle dispersion which has excellent storage stability and from which it is possible to form a coating film having high light transmittance and high coating film strength (high adhesiveness with respect to a base material of the coating film). The inorganic fine particle dispersion contains inorganic fine particles, a liquid dispersion medium A (excluding water) having a boiling point not lower than 100°C but lower than 190°C, and a liquid dispersion medium B having a boiling point lower than 100°C. The percentage content of the liquid dispersion medium A is not less than 0.5 mass% but less than 15 mass% with respect to 100 mass% of the total amount of the inorganic fine particle dispersion.

EP 4 316 806 A1

**Description**

Technical Field

The present application relates to an inorganic fine particle dispersion.

Background Art

Conventionally, antireflection films have been formed on a surface of a display to prevent glare and the like of the display. As a material for the antireflection film, for example, Patent Document 1 describes an inorganic fine particle dispersion containing an inorganic fine particle chain, a inorganic fine particle and a liquid dispersion medium.

Prior Art Document

Patent Document

Patent Document 1: JP 2006-327187 A

Summary of Invention

Technical Problem

In recent years, an antireflection film has been formed on a surface of a protective glass of a solar cell to improve power generation efficiency, but further improvement in light transmittance of the protective glass of the solar cell is required.
An object of the present invention is to provide an inorganic fine particle dispersion capable of forming a layer with a higher light transmittance.

Solution to Problem

In view of such background, the present inventors have conducted intensive studies and have thus completed the present invention.
That is, the present invention relates to, but is not limited to, the following:

[1] An inorganic fine particle dispersion comprising:

an inorganic fine particle,
a liquid dispersion medium A, excluding water, having a boiling point of 100°C or more and less than 190°C, and
a liquid dispersion medium B having a boiling point of less than 100°C,
wherein a content of the liquid dispersion medium A is 0.5% by mass or more and less than 15% by mass based on a total amount of the inorganic fine particle dispersion being 100% by mass.

The following [2] to [14] are each a preferred aspect or embodiment of the present invention.
[2] The inorganic fine particle dispersion according to [1], wherein a content of the liquid dispersion medium B is 20% by mass or more and 85% by mass or less based on the total amount of the inorganic fine particle dispersion being 100% by mass.
[3] The inorganic fine particle dispersion according to [1] or [2], wherein the liquid dispersion medium B is alcohol.
[4] The inorganic fine particle dispersion according to any one of [1] to [3], further comprising water.
[5] The inorganic fine particle dispersion according to [4], wherein a content of the water is 5% by mass or more and 55% by mass or less based on the total amount of the inorganic fine particle dispersion being 100% by mass.
[6] The inorganic fine particle dispersion according to any one of [1] to [5], further comprising an alkoxysilane and/or a condensate thereof.
[7] The inorganic fine particle dispersion according to any one of [1] to [5], further comprising one or more selected from the group consisting of alkoxysilane, an alkoxysilane condensate having a plurality of Si-O-Si bonds linearly connected, and an alkoxysilane condensate having a plurality of Si-O-Si bonds three-dimensionally connected.
[8] The inorganic fine particle dispersion according to any one of claims 1 to 7, wherein the liquid dispersion medium A is alcohol.
[9] The inorganic fine particle dispersion according to any one of [1] to [8], further comprising a surfactant.

[10] The inorganic fine particle dispersion according to any one of [1] to [8], further comprising a surfactant comprising a polyether-modified siloxane.

[11] The inorganic fine particle dispersion according to any one of [1] to [10], wherein the inorganic fine particle is colloidal silica.

[12] The inorganic fine particle dispersion according to any one of [1] to [11], wherein a content of the inorganic fine particle is 0.1% by mass or more and 10% by mass or less based on the total amount of the inorganic fine particle dispersion being 100% by mass.

[13] A method for producing a laminate, comprising:

an application step of applying the inorganic fine particle dispersion according to any one of [1] to [12] onto a base material; and
a dispersion medium removal step of removing a liquid dispersion medium A and a liquid dispersion medium B from the inorganic fine particle dispersion applied onto the base material to form an inorganic fine particle layer on the base material.

[14] The method for producing a laminate according to [13], further comprising a heat treatment step after the dispersion medium removal step.

[15] A laminate comprising a base material and an inorganic fine particle layer, obtained by the method according to [13] or [14].

Advantageous Effects of Invention

The present invention can provide an inorganic fine particle dispersion capable of forming a coating film having high light transmittance and high coating film strength (high adhesion of the coating film to a base material) with good storage stability.

The present invention can also provide a laminate having high light transmittance and high coating film strength (high adhesion of the coating film to a base material).

Description of Embodiment

An embodiment of the present invention is described in detail below.

<Inorganic fine particle dispersion>

The inorganic fine particle dispersion of the present invention contains:

an inorganic fine particle,
a liquid dispersion medium A, excluding water, having a boiling point of 100°C or more and less than 190°C, and
a liquid dispersion medium B having a boiling point of less than 100°C,
in which a content of the liquid dispersion medium A is 0.5% by mass or more and less than 15% by mass based on a total amount of the inorganic fine particle dispersion being 100% by mass.

[Inorganic fine particle]

In the present invention, the inorganic fine particle can be an inorganic fine particle X having a primary particle diameter of 1 nm or more and 60 nm or less or an inorganic fine particle Y formed by a chain of a plurality of inorganic fine particles having a primary particle diameter of 1 nm or more and 60 nm or less. Here, the expression "formed by a chain of a plurality" includes not only a linearly connected state but also a bent connected state, a circularly connected state and a branched state.

The primary particle diameter of the inorganic fine particle is evaluated as the number average of the particle diameter of 50 or more particles obtained by observation with a transmission microscope. The state of "a plurality of inorganic fine particles in a chain" in the inorganic fine particle Y can also be determined by observation with a transmission microscope.

Examples of materials of the inorganic fine particles include silicon oxide (silica), titanium oxide, aluminum oxide, zinc oxide, tin oxide, calcium carbonate, barium sulfate, talc and kaolin, and one or more thereof can be used. From the viewpoint of dispersibility in the inorganic fine particle dispersion, silica is preferred. Among silica, colloidal silica and fumed silica are more preferred, and colloidal silica is particularly preferred. The colloidal silica can be an inorganic fine particle dispersion containing colloidal silica particles at a solid concentration of 5% by weight to 50% by weight, for example, 5% by weight to 40% by weight, and preferably 10% by weight to 30% by weight. The colloidal silica dispersed in various solvents can be used, and examples of the solvents include the following:

alcohol solvents such as methanol, ethanol, isopropanol, ethylene glycol and ethylene glycol mono-n-propyl ether;
amide solvents such as dimethylacetamide and N-methylpyrrolidone;
aromatic solvents such as toluene;
ketone solvents such as methyl ethyl ketone, methyl isobutyl ketone and cyclohexanone;
ester solvents such as ethyl acetate; and
water.

A mixture of a plurality of these solvents can also be used.

Preferred are alcohol solvents such as methanol, ethanol, isopropanol, ethylene glycol, ethylene glycol mono-n-propyl ether and water; more preferred are methanol, ethanol, isopropanol and water; even more preferred are ethanol, isopropanol and water; and still more preferred are water.

As the inorganic fine particle, it is possible to use an inorganic fine particle X having a primary particle diameter of 1 nm or more and 60 nm or less or an inorganic fine particle Y formed by a chain of a plurality of inorganic fine particles having a primary particle diameter of 1 nm or more and 60 nm or less.

The primary particle diameter of the inorganic fine particle X is preferably 1 nm or more and 50 nm or less, more preferably 1 nm or more and 30 nm or less, even more preferably 1 nm or more and 20 nm or less, and particularly preferably 3 nm or more and 10 nm or less, from the viewpoint of satisfying both the transmittance and the coating film strength.

The primary particle diameter of the inorganic fine particle Y formed by a chain of a plurality of inorganic fine particles having a primary particle diameter of 1 nm or more and 60 nm or less is preferably 1 nm or more and 50 nm or less, more preferably 1 nm or more and 45 nm or less, even more preferably 1 nm or more and 30 nm or less, and particularly preferably 5 nm or more and 20 nm or less, from the viewpoint of satisfying both the transmittance and the coating film strength.

The average particle diameter of the inorganic fine particle Y is preferably 1 to 500 nm and more preferably 1 to 400 nm, which is determined by dynamic light scattering or a Sears method. The average particle diameter can be measured by dynamic light scattering using a commercially available particle diameter distribution measuring device. The Sears method is a method described in Analytical Chemistry, vol. 28, p.1981-1983, 1956, and is an analytical technique applied to the measurement of the average particle diameter of silica particles. The method includes determining the surface area from the amount of NaOH consumed until the colloidal silica dispersion with a pH of 3 is brought to a pH of 9 and then calculating a sphere equivalent diameter from the obtained surface area. The sphere equivalent diameter thus determined is defined as the average particle diameter.

In addition, the mixing ratio between the inorganic fine particle X having a primary particle diameter of 1 nm or more and 60 nm or less and the inorganic fine particle Y formed by a chain of a plurality of inorganic fine particles having a primary particle diameter of 1 nm or more and 60 nm or less is not particularly limited, but both are preferably used from the viewpoint of transmittance and coating film strength. A value of (mass of inorganic fine particle Y)/[(mass of inorganic fine particle X) + (mass of inorganic fine particle Y)] is preferably 0.01 or more and 0.99 or less, more preferably 0.10 or more and 0.95 or less, even more preferably 0.20 or more and 0.95 or less, still more preferably 0.40 or more and 0.95 or less, still more preferably 0.50 or more and 0.90 or less, and still more preferably 0.60 or more and 0.80 or less. In addition, one or more of inorganic fine particles may be used as the inorganic fine particle X, and one or more of inorganic fine particles may be used as the inorganic fine particle Y

The content of the inorganic fine particles is not particularly limited, but is preferably 0.1% by mass or more and 10% by mass or less, more preferably 0.1% by mass or more and 7.5% by mass or less, even more preferably 0.2% by mass or more and 5.0% by mass or less, and particularly preferably 1% by mass or more and 5.0% by mass or less, based the total weight of the inorganic fine particle dispersion being 100% by weight, from the viewpoint of transparency of the resulting coating film and dispersibility in the inorganic fine particle dispersion. Hereinafter, the content of the inorganic fine particles with respect to 100% by mass of the entire inorganic fine particle dispersion may be referred to as a "solid concentration of the inorganic fine particles in the inorganic fine particle dispersion". The "content of the inorganic fine particles" means the total value of the content of the inorganic fine particle X and the content of the inorganic fine particle Y.

The inorganic fine particles in the inorganic fine particle dispersion may be subjected to a surface treatment from the viewpoint of dispersibility in the dispersion, coating, and coating film formation. As a method of the surface treatment, a known method can be used, and examples thereof include treatment with an appropriate additive. The surface treatment of the inorganic fine particles can be performed, for example, by mixing a liquid containing the inorganic fine particles, an additive, and a solvent.

Specific examples of the inorganic fine particle X include a commercially available product in the form of an aqueous dispersion, such as SNOWTEX (R) ST-XS, ST-OXS, ST-NXS, ST-CXS, ST-S, ST-OS, ST-NS, ST-3O, ST-O, ST-N, ST-C, ST-AK, ST-5O-T, ST-O-4O, ST-N-4O, ST-CM, ST-3OL, ST-OL, ST-AK-L, ST-YL, ST-OYL and ST-AK-YL; a commercially available product in the form of a methanol dispersion, such as methanol silica sol (R), MA-ST-M, and MA-ST-L; a commercially available product in the form of an isopropyl alcohol dispersion, such as IPA-ST and IPA-ST-L; a commercially available product in the form of an ethylene glycol monopropyl ether dispersion, such as NPC-ST-30; a commercially available product in the form of a toluene dispersion, such as TOL-ST; a commercially available product in the form of a 2-butanone dispersion, such as MEK-ST-40, MEK-ST-L, MEK-EC-2130Y, MEK-EC-2430Z, MEK-AC-2140Z, MEK-AC-4130Y, and MEK-AC-5140Z; MIBK-ST, MIBK-ST-L, MIBK-AC-2140Z and MIBK-SD-L in the form of a 4-methyl-2-pentanone dispersion; CHO-ST-M in the form of a cyclohexanone dispersion; a commercially available product in the form of an ethyl acetate dispersion, such as EAC-ST; and PMA-ST in the form of a propylene glycol 1-monomethyl ether 2-acetate dispersion. Among them, the product in the form of an aqueous dispersion is preferred. Particularly, ST-OXS, ST-NXS, ST-CXS, ST-OS, ST-NS, ST-O, ST-N, ST-C, ST-O-4O, ST-N-4O, ST-CM, ST-OL and ST-OYL are preferred, and ST-OXS, ST-OS, ST-O, ST-O-4O, ST-OL and ST-OYL are more preferred.

Specific examples of the inorganic fine particle Y include a commercially available product in the form of an aqueous dispersion, such as SNOWTEX (R) ST-UP, ST-OUP, ST-PS-S, ST-PS-SO, ST-PS-M and ST-PS-MO; a commercially available product in the form of a methanol dispersion, such as MA-ST-UP; a commercially available product in the form of an isopropyl alcohol dispersion, such as IPA-ST-UP; and a commercially available product in the form of a 2-butanone dispersion, such as MEK-ST-UP. Among them, the product in the form of an aqueous dispersion is preferred. Particularly, ST-OUP, ST-PS-SO and ST-PS-MO are preferred, and ST-OUP is more preferred.

A method for synthesizing the inorganic fine particle X and the inorganic fine particle Y is not particularly limited, and examples thereof include hydrolysis and/or condensation of a metal alkoxide, thermal decomposition of a metal salt, grinding and/or disintegration of a metal oxide, precipitation of an aqueous metal salt solution and hydrothermal treatment of an aqueous metal salt solution.

Preferred silica from the viewpoint of dispersibility is synthesized by a known method (sometimes referred to as a sol-gel method) such as a method of ion-exchanging an aqueous sodium silicate solution with an ion-exchange resin or the like, followed by particle growth and concentration (sometimes referred to as a water-glass method), a method of neutralizing an aqueous sodium silicate solution by adding an aqueous sulfuric acid solution thereto, followed by particle growth and concentration (sometimes referred to as a precipitation method), a method of thermally decomposing silicon tetrachloride and a method of hydrolyzing and condensing alkoxysilane.

In the case of a synthesis method by ion-exchange of sodium silicate, the amount of sodium ions contained in the silica sol is preferably 0.5% by weight or less, more preferably 0.05% by mass or less, and even more preferably 0.03% by weight or less in terms of the amount of $Na_2O$, from the viewpoint of forming an inorganic fine particle layer with high light transmittance.

[Liquid dispersion medium A]

In the present invention, the liquid dispersion medium A is a liquid (excluding water) having a boiling point of 100°C or more and less than 190°C under atmospheric pressure (1013.25 hPa). When the entire amount of the inorganic fine particle dispersion is 100% by mass, the content of the liquid dispersion medium A is 0.5% by mass or more and less than 15% by mass.

The range of the boiling point of the liquid dispersion medium A is preferably 115°C or more and less than 190°C, more preferably 125°C or more and less than 190°C, even more preferably 135°C or more and less than 190°C, still more preferably 150°C or more and less than 190°C, still more preferably 155°C or more and less than 190°C, still more preferably 155°C or more an less than 180°C, still more preferably 160°C or more and less than 180°C, and still more preferably 170°C° or more and less than 180°C.

The lower limit of the content of the liquid dispersion medium A is preferably 0.7% by mass or more, and more preferably 0.8% by mass or more when the entire amount of the inorganic fine particle dispersion is 100% by mass because the use of the liquid dispersion medium A suppresses aggregation of the inorganic fine particles during drying of the coating film and improves the transmittance and the coating film strength. In addition, the upper limit of the content of the liquid dispersion medium A is preferably 13% by mass or less, more preferably 12% by mass or less, even more preferably 8% by mass or less, still more preferably 5% by mass or less, and still more preferably 3% by mass or less when the entire amount of the inorganic fine particle dispersion is 100% by mass because if the liquid dispersion medium A is contained in excess, the storage stability of the inorganic fine particle dispersion is deteriorated due to gelation and the like.

A good example of the liquid dispersion medium A is one in which δtA defined by the following formula is 20 $Mpa^{0.5}$ or more and 40 $Mpa^{0.5}$ or less.

$$\delta tA$$

$$= \{4(\delta DA - 15.6)^2 + (\delta PA - 16.0)^2 + (\delta HA - 42.0)^2\}^{0.5} \qquad (1)$$

(In the formula, $\delta DA$, $\delta PA$ and $\delta HA$ represent a dispersion term ($Mpa^{0.5}$), a polar term ($Mpa^{0.5}$), and a hydrogen-bonding term ($Mpa^{0.5}$), respectively, in the Hansen solubility parameter of the liquid dispersion medium A.)

The above $\delta DA$, $\delta PA$, and $\delta HA$ are calculated using the commonly available commercial software "HSPiP 5th 5.2.06" by applying a method called Y-MB in the software.

In terms of a preferred range of $\delta tA$, the upper limit thereof is preferably 39 $Mpa^{0.5}$ or less, more preferably 35.5 $Mpa^{0.5}$ or less, and even more preferably 34 $Mpa^{0.5}$ or less. The lower limit thereof is preferably 25 $Mpa^{0.5}$ or more, more preferably 29 $Mpa^{0.5}$ or more, and even more preferably 30 $Mpa^{0.5}$ or more. The liquid dispersion medium A having $\delta tA$ in such a range has high affinity with the silica particles and good coating properties.

From the viewpoint of the coating properties, the lower limit of the molecular weight of the liquid dispersion medium A is preferably 60 or more, more preferably 70 or more, further preferably 90 or more, and particularly preferably 100 or more. The upper limit thereof is preferably 300 or less, more preferably 200 or less, further preferably 170 or less, and particularly preferably 140 or less.

Examples of the type of the liquid dispersion medium A include, but are not limited to, an ether liquid dispersion medium, an ester liquid dispersion medium, an alcohol liquid dispersion medium, a ketone liquid dispersion medium, an amine liquid dispersion medium, an amide liquid dispersion medium, and a sulfoxide liquid dispersion medium. Specific examples of the liquid dispersion medium A include, but are not limited to, the following:

2-methoxyethyl acetate, 4-methyl-2-pentanone, 1-methoxy-2-propanol, 4-ethylmorpholine, isoamyl acetate, propylene glycol 1-monomethyl ether 2-acetate, 1-propoxy-2-propanol, N,N-dimethylformamide, 2-ethoxyethyl acetate, dimethyl sulfoxide, and dipropylene glycol dimethyl ether;

n-pentyl acetate, n-propyl acetate, ethyl acetoacetate, 2-pentanone, 3-pentanone, acetylacetone (2,4-pentanedione), n-butyl alcohol, isobutyl alcohol, 1-hexanol, furfuryl alcohol, 2-methyl-2-butanol, 1-pentanol, 3-pentanol, dibutyl ether, 1, 4-dioxane, 2-butoxyethanol (ethylene glycol monobutyl ether), 2-methoxyethanol (ethylene glycol monomethyl ether), 2-ethoxyethanol (ethylene glycol monoethyl ether), 2-ethylhexanol, N,N-dimethylacetamide, ethyl lactate, diethylene glycol ethyl methyl ether, 3-methoxybutyl acetate, 2-(butylamino)ethanol, 2-(methylamino)ethanol, N-cyclohexylamine, 1,2-propanediol, 3-methoxy-3-methylbutanol, propylene glycol 1-monobutyl ether, 1-ethoxy-2-propanol, 3-methoxy-1-propanol, 3-methoxy-1-butanol, ethylene glycol mono-t-butyl ether, 2-isopropoxyethanol, 2-propoxyethanol, 2-isobutoxyethanol, 2-allyloxyethanol, tetrahydrofurfuryl alcohol, 2-hydroxyethyl acetate and 1-butanol;

diethylene glycol dimethyl ether, diethylene glycol diethyl ether, and 1,2-diethoxyethane; and

1,2-diacetoxypropane, 3-methoxy-3-methylbutyl acetate.

The preferred liquid dispersion medium A includes a medium corresponding to any of an alcohol, one having an ether bond, and one having an ester bond. More preferred is a medium that corresponds to any of an alcohol, one having an ether bond, and one having an ester bond but does not contain a nitrogen atom. When such a liquid dispersion medium A is used, the coating properties become better.

In an aspect of the inorganic fine particle dispersion, the liquid dispersion medium A is preferably an alcohol. If the liquid dispersion medium A is an alcohol, the compatibility of an inorganic fine particle component, alkoxysilane to be described later, and/or a condensate (C) thereof during coating is improved, resulting in good coating properties. Thus, a laminate having high coating film strength (high adhesion of the coating film to the base material) can be obtained.

When the liquid dispersion medium A is an alcohol, a good example thereof is a monohydric alcohol. In addition, an alcohol having at least one of an ether bond and an ester bond is preferred. In the case of such an alcohol, the dispersion and the coating properties of the inorganic fine particles become good. Specific examples thereof include 1-methoxy-2-propanol, 1-propoxy-2-propanol, furfuryl alcohol, 2-butoxyethanol (ethylene glycol monobutyl ether), 2-methoxyethanol (ethylene glycol monomethyl ether), 2-ethoxyethanol (ethylene glycol monoethyl ether), ethyl lactate, 3-methoxy-3-methylbutanol, propylene glycol 1-monobutyl ether, 1-ethoxy-2-propanol, 3-methoxy-1-propanol, 3-methoxy-1-butanol, ethylene glycol mono-t-butyl ether, 2-isopropoxyethanol, 2-propoxyethanol, 2-isobutoxyethanol, 2-allyloxyethanol, tetrahydrofurfuryl alcohol, and 2-hydroxyethyl acetate.

More preferably, examples thereof include: 1-propoxy-2-propanol, 2-butoxyethanol (ethylene glycol monobutyl ether), 2-ethoxyethanol (ethylene glycol monoethyl ether), ethyl lactate, 3-methoxy-3-methylbutanol, propylene glycol 1-monobutyl ether, 1-ethoxy-2-propanol, 3-methoxy-1-propanol, 3-methoxy-1-butanol, ethylene glycol mono-t-butyl ether, 2-isopropoxyethanol, 2-propoxyethanol, 2-isobutoxyethanol, and tetrahydrofurfuryl alcohol.

Even more preferably, examples thereof include: 2-butoxyethanol (ethylene glycol monobutyl ether), 3-methoxy-3-methylbutanol, propylene glycol 1-monobutyl ether, 3-methoxy-1-propanol, 3-methoxy-1-butanol, ethylene glycol mono-t-butyl ether, 2-propoxyethanol, 2-isobutoxyethanol, and tetrahydrofurfuryl alcohol.

[Liquid dispersion medium B]

In the present invention, the liquid dispersion medium B is a liquid having a boiling point of less than 100°C under atmospheric pressure (1013.25 hPa).

The liquid dispersion medium B preferably has δtB defined by the following formula of 15 Mpa$^{0.5}$ or more and 39 Mpa$^{0.5}$ or less.

$$\delta tB = \{4(\delta DB - 15.6)^2 + (\delta PB - 16.0)^2 + (\delta HB - 42.0)^2\}^{0.5} \tag{2}$$

(In the formula, δDB, δPB and δHB represent a dispersion term (Mpa$^{0.5}$), a polar term (Mpa$^{0.5}$), and a hydrogen-bonding term (Mpa$^{0.5}$), respectively, in the Hansen solubility parameter of the liquid dispersion medium B.)

The above δDB, δPB, and δHB are calculated using the commonly available commercial software "HSPiP 5th 5.2.06" by applying a method called Y-MB in the software.

In terms of a preferred range of δtB, the upper limit thereof is preferably 32 Mpa$^{0.5}$ or less, more preferably 31 Mpa$^{0.5}$ or less, and even more preferably 27 Mpa$^{0.5}$ or less. The lower limit thereof is preferably 18 Mpa$^{0.5}$ or more, more preferably 23 Mpa$^{0.5}$ or more, and even more preferably 25 Mpa$^{0.5}$ or more. The liquid dispersion medium B having δtB in such a range has high affinity with the silica particles and good coating properties.

Examples of the type of the liquid dispersion medium B include an ether medium, an ester medium, and an alcohol medium. Examples of the ether medium include diethyl ether; examples of the ester medium include methyl acetate and ethyl acetate; and examples of the alcohol medium include methanol, ethanol, tert-butyl alcohol, sec-butyl alcohol, isopropyl alcohol, and n-propyl alcohol. From the viewpoint of the dispersibility of the inorganic fine particles in the inorganic fine particle dispersion, an alcohol medium is preferred; methanol, ethanol, and isopropyl alcohol are more preferred; and ethanol and isopropyl alcohol are particularly preferred. From the viewpoint of safety, ethanol is further preferred.

The content of the liquid dispersion medium B is not particularly limited. From the viewpoint of coating properties and storage stability, however, the content is preferably 20% by mass or more, more preferably 30% by mass or more, even more preferably 40% by mass or more, still more preferably 60% by mass or more, and preferably 95% by mass or less, more preferably 90% by mass or less, even more preferably 85% by mass or less, and still more preferably 80% by mass or less when the entire amount of the inorganic fine particle dispersion is 100% by mass.

[Water]

In the present invention, an aspect of the inorganic fine particle dispersion also preferably contains water. The lower limit of the content of water is preferably 1 % by mass or more, more preferably 3% by mass or more, even more preferably 5% by mass or more, still more preferably 8% by mass or more, and still more preferably 10% by mass or more when the entire amount of the inorganic fine particle dispersion is 100% by mass, from the viewpoint of coating properties and storage stability. The upper limit of the content of water is preferably 55% by mass or less, more preferably 50% by mass or less, even more preferably 45% by mass or less, still more preferably 35% by mass or less, still more preferably 25% by mass or less, and still more preferably 20% by mass or less, from the viewpoint of transmittance.

[Alkoxysilane and/or condensate thereof (C)]

In the present invention, an aspect of the inorganic fine particle dispersion preferably contains an alkoxysilane and/or a condensate thereof (component C). The component C is an alkoxysilane and/or a condensate thereof. Examples of the alkoxysilane include tetraalkoxysilane.

An aspect of the tetraalkoxysilane is represented by the following formula: $Si(OR)_4$ (where four R's each independently represent an alkyl group having 1 to 6 carbon atoms). An aspect of a condensate of the tetraalkoxysilane is represented by the following formula: $Si_nO_{n-1}(OR)_{2n+2}$ (where each R independently represents an alkyl group having 1 to 6 carbon atoms, n is 2 to 1000, and an aspect of n is 2 to 100). Examples of the alkoxysilane include tetramethoxysilane, tetraethoxysilane, tetrapropoxysilane, and tetrabutoxysilane, and tetramethoxysilane and tetraethoxysilane are preferred. Hereinafter, the alkoxysilane is sometimes referred to as a "component C1". As the alkoxysilane, a commercially available product may be used.

The alkoxysilane may be partially hydrolyzed at a OR moiety or further condensed at the hydrolyzed moiety.

An aspect of the alkoxysilane is a silicon compound represented by the formula (1) below.

$$Si(R^a)_q(R^b)_{4-q} \qquad (1)$$

In the formula, $R^a$ represents a hydrogen atom or a nonhydrolyzable organic group, and $R^b$ represents a hydrolyzable group. q represents an integer of 0 to 2.

As used herein, "hydrolyzable" refers to a property of forming a silanol group upon reaction with water.

Examples of the nonhydrolyzable organic group of $R^a$ include an alkyl group having 1 to 10 carbon atoms, such as a methyl group, an ethyl group, a n-propyl group, an isopropyl group, a n-butyl group, a sec-butyl group, an isobutyl group, a tert-butyl group a tert-amyl group (1,1-dimethylpropyl group), a 1,1-dimethyl-3, 3-dimethylbutyl group, a heptyl group, an octyl group, a nonyl group and a decyl group; a cycloalkyl group having 3 to 10 carbon atoms, such as a cyclopentyl group and a cyclohexyl group; an alkenyl group having 2 to 10 carbon atoms, such as a vinyl group and an allyl group; an alkylidene group having 2 to 10 carbon atoms, such as an ethylidene group and a propylidene group; and an aromatic group having 6 to 15 carbon atoms, such as a phenyl group, a naphthyl group and an anthracenyl group.

A hydrogen atom contained in the organic group is optionally substituted with a (meth)acryloyloxy group, an epoxy group, an amino group, a mercapto group, a hydroxy group, a halogen atom, an alkoxy group, a fluoroalkyl group, a glycidoxy group, or the like. One hydrogen atom in the organic group is optionally substituted, or two or more hydrogen atoms are optionally substituted.

Examples of the hydrolyzable group of $R^b$ include an alkoxy group having 1 to 5 carbon atoms, such as a methoxy group, an ethoxy group, and a propoxy group.

q represents an integer of 0 to 2 and is preferably 0 or 1. An aspect of q is 0. Another aspect of q is 1.

In the silicon compound represented by the formula (1), the hydrolyzable group may be hydrolyzed or further condensed at the hydrolyzed moiety.

Examples of the silicon compound represented by the formula (1) include a silicon compound in which q is 0, such as tetramethoxysilane, tetraethoxysilane, tetra-n-propoxysilane, tetraisopropoxysilane, tetra-n-butoxysilane, tetraisobutoxysilane, tetra-sec-butoxysilane, and tetra-tert-butoxysilane; a silicon compound in which q is 1, such as methyltrimethoxysilane, methyltriethoxysilane, methyltripropoxysilane, methyltriisopropoxysilane, ethyltrimethoxysilane, ethyltriethoxysilane, propyltrimethoxysilane, propyltriethoxysilane, butyltrimethoxysilane, butyltriethoxysilane, phenyltrimethoxysilane, phenyltriethoxysilane, vinyltrimethoxysilane, and vinyltriethoxysilane; and a silicon compound in which q is 2, such as dimethyldimethoxysilane, dimethyldiethoxysilane, diethyldimethoxysilane, diethyldiethoxysilane, methylphenyldimethoxysilane, divinyldimethoxysilane, and divinyldiethoxysilane.

The inorganic fine particle dispersion may contain only one or two or more of the silicon compounds represented by formula (1). In addition, the inorganic fine particle dispersion may contain a silicon compound in which q is 3, such as trimethylmethoxysilane, triethylmethoxysilane, triethylmethoxysilane, triethylethoxysilane, trivinylmethoxysilane, and trivinylethoxysilane, together with the silicon compound represented by the formula (1).

The alkoxysilane condensate (hereinafter, sometimes referred to as a "component C2") can be obtained by subjecting alkoxysilane monomers to hydrolysis and condensation reactions. The degree of polymerization of the alkoxysilane condensate is not particularly limited. An aspect of the degree of polymerization of the alkoxysilane condensate is 2 to 1000, and another aspect is 2 to 100. Hereinafter, the alkoxysilane condensate having a degree of polymerization of 2 to 1000 is sometimes referred to as a "component C2-1". An aspect of the alkoxysilane condensate may be a 2- to 10-mer oligomer. Another aspect of the alkoxysilane condensate is an alkoxysilane condensate having a plurality of Si-O-Si bonds linearly connected (hereinafter, sometimes referred to as a "component C2-2"). An aspect of the component C2-2 is an alkoxysilane condensate in which more than half of the terminals of the alkoxysilane condensate are alkoxy groups. Another aspect of the alkoxysilane condensate is an alkoxysilane condensate having a plurality of Si-O-Si bonds three-dimensionally connected (hereinafter, sometimes referred to as a "component C2-3"). An aspect of the component C2-3 is an alkoxysilane condensate in which more than half of the terminals of the alkoxysilane condensate are hydroxy groups. The average particle diameter of the alkoxysilane condensate is preferably less than 1 $\mu$m. As the alkoxysilane condensate, a commercially available product may be used. The alkoxysilane condensate may be partially hydrolyzed at the OR moiety described above or further condensed at the hydrolyzed moiety.

Examples of the commercially available product of the alkoxysilane condensate include methyl silicate 51, which is a mean tetramer oligomer of tetramethoxysilane; methyl silicate 53A, which is a mean heptamer oligomer of tetramethoxysilane; ethyl silicate 40, which is a mean pentamer oligomer of tetraethoxysilane; ethyl silicate 48, which is a mean decamer oligomer of tetraethoxysilane; and EMS-485, which is a mixture of a tetramethoxysilane oligomer and a tetraethoxysilane oligomer and is a mean decamer oligomer (all manufactured by Colcoat Co., Ltd.).

Examples of the commercially available product of methyl silicate hydrolyzed condensate among alkoxysilane condensates include MS51, MS56, MS57, and MS56S (all manufactured by Mitsubishi Chemical Corporation), each of which is a condensate having a plurality of Si-O-Si bonds linearly connected. More than half of the terminals of the condensate are alkoxy groups.

Examples of the commercially available product of ethyl silicate hydrolyzed condensate among alkoxysilane condensates include HAS-1, HAS-6, and HAS-10 (all manufactured by Colcoat Co., Ltd.), each of which is a condensate having a plurality of Si-O-Si bonds linearly connected. More than half of the terminals of the condensate are alkoxy groups.

The peak top molecular weight of the alkoxysilane condensate is preferably 100 to 10000, and more preferably 500 to 5000. An aspect of the peak top molecular weight of the alkoxysilane condensate is 500 to 2000. Another aspect of the peak top molecular weight of the alkoxysilane condensate is 500 to 1000.

As the peak top molecular weight of the alkoxysilane condensate, a value measured by gel permeation chromatography can be generally used.

The inorganic fine particle dispersion may contain the alkoxysilane and the condensate thereof either individually or in combination. The inorganic fine particle dispersion may contain only one or two or more of the components C.

The amount of the component C in the inorganic fine particle dispersion is not particularly limited, but is preferably 0.001 to 2% by weight, more preferably 0.005 to 1% by weight, and even more preferably 0.01 to 0.5% by weight, based on the total weight of the inorganic fine particle dispersion being 100% by weight. Hereinafter, the amount of the component C contained is sometimes referred to as "solid concentration of the component C in the dispersion".

The inorganic fine particle dispersion may contain, as the component (C), only an alkoxysilane, only an alkoxysilane condensate, or an alkoxysilane and an alkoxysilane condensate. When the inorganic fine particle dispersion contains an alkoxysilane and an alkoxysilane condensate, examples of the combination thereof include a combination of a silicon compound in which q in the formula (1) is 0 and 2 to 10 mers of alkoxysilane; a combination of a silicon compound in which q in the formula (1) is 0 and a condensate having a plurality of Si-O-Si bonds linearly connected and more than half of the terminals of the condensate are alkoxy groups; a combination of a silicon compound in which q in the formula (1) is 0 and a condensate having a plurality of Si-O-Si bonds three-dimensionally connected and more than half of the terminals of the condensate are hydroxyl groups; a combination of a silicon compound in which q in the formula (1) is 1 and 2 to 10 mers of alkoxysilane; a combination of a silicon compound in which q in the formula (1) is 1 and a condensate having a plurality of Si-O-Si bonds linearly connected and more than half of the terminals of the condensate are alkoxy groups; and a combination of a combination of a silicon compound in which q in the formula (1) is 1 and a condensate having a plurality of Si-O-Si bonds three-dimensionally connected and more than half of the terminals of the condensate are hydroxyl groups.

The inorganic fine particle dispersion may contain, as the component (C), only one alkoxysilane or two or more thereof.

The inorganic fine particle dispersion may contain, as the component (C), only one or two or more of the alkoxysilane condensates. When the inorganic fine particle dispersion contains two or more alkoxysilane condensates, examples of the combination thereof include a combination of 2 to 10 mers of alkoxysilane and a condensate having a plurality of Si-O-Si bonds linearly connected and more than half of the terminals of the condensate are alkoxy groups; a combination of 2 to 10 mers of alkoxysilane and a condensate having a plurality of Si-O-Si bonds three-dimensionally connected and more than half of the terminals of the condensate are hydroxyl groups; a combination of a condensate having a plurality of Si-O-Si bonds linearly connected and more than half of the terminals of the condensate are alkoxy groups, and a condensate having a plurality of Si-O-Si bonds three-dimensionally connected and more than half of the terminals of the condensate are hydroxyl groups.

The inorganic fine particle dispersion preferably contains, as the component (C), one or more alkoxysilane condensates. An aspect of the alkoxysilane condensate is preferably alkoxysilane condensate having a plurality of Si-O-Si bonds linearly connected. Such alkoxysilane condensates include those represented by the following formula: $Si_nO_{n-1}(OR)_{2n+2}$ (where each R independently represents an alkyl group having 1 to 6 carbon atoms, and n represents 2 to 1000). Such an inorganic fine particle dispersion is more excellent in coating film strength. In the above formula, examples of the alkyl group having 1 to 6 carbon atoms include a methyl group, an ethyl group, a propyl group, a butyl group, a pentyl group, and a hexyl group, preferably a methyl group, an ethyl group, and a butyl group, and more preferably a methyl group and an ethyl group. In the formula, n represents 2 to 1000, n is preferably 3 to 100, more preferably 4 to 50, even more preferably 6 to 30, and n is still more preferably 8 to 30.

Specific examples of commercially available product of the alkoxysilane condensate include, but are not limited to, MS51, MS56, MS57, and MS56S (all manufactured by Mitsubishi Chemical Corporation), and HAS-1, HAS-6, and HAS-10 (all manufactured by Colcoat Co., Ltd.).

<Ratio of weight of $SiO_2$ in component C>

The ratio of the weight of $SiO_2$ in the component C to the total weight of the inorganic fine particle X and the inorganic fine particle Y is preferably 0.005 to 0.6, more preferably 0.005 to 0.2, even more preferably 0.007 to 0.15, and particularly preferably 0.01 to 0.12.

A liquid containing the component C and a solvent may be used as a raw material liquid when an inorganic fine particle dispersion is produced. The raw material liquid containing the component C may contain an additive that promotes hydrolysis and dehydration condensation, suppresses aggregation of condensates or controls adhesion to a base material. One example of the additive is an acrylic-urethane resin.

[Surfactant]

An aspect of the inorganic fine particle dispersion preferably contains a surfactant from the viewpoint of smoothness of a coating film and the like. In the case where the inorganic fine particle dispersion contains a surfactant, the amount of the surfactant contained is preferably 0.01 parts by mass or more and 0.5 parts by weight or less, more preferably 0.1 parts by mass or more and 0.45 parts by mass or less, and even more preferably more than 0.3 parts by mass and 0.45 parts by mass or less per 100 parts by mass of the liquid dispersion medium.

The surfactant to be used is not particularly limited, and examples thereof include an anionic surfactant, a cationic surfactant, a nonionic surfactant, and an amphoteric surfactant. A preferred surfactant includes an nonionic surfactant.

Examples of the anionic surfactant include an alkali metal salt of a carboxylic acid. Specific examples thereof include sodium caprylate, potassium caprylate, sodium decanoate, sodium caproate, sodium myristate, potassium oleate, tetramethylammonium stearate and sodium stearate. In particular, an alkali metal salt of a carboxylic acid with an alkyl chain having 6 to 10 carbon atoms is preferred.

Examples of the cationic surfactant include cetyltrimethylammonium chloride, dioctadecyldimethylammonium chloride, N-octadecylpyridinium bromide and cetyltriethylphosphonium bromide.

Examples of the nonionic surfactant include polyether-modified siloxane. The siloxane chain, the main chain of the polyether-modified siloxane, may have a linear or branched structure; the ether chain, the side chain of the polyether-modified siloxane may have a linear or branched structure; and a part of the side chain of the polyether-modified siloxane may be modified with an alkyl group or the like. As the polyether-modified siloxane, a commercially available product can be used, and examples thereof include KF-6015, KF-6017, KF-6017P, KF-6028, KF-6028P, KF-6038, KF-6043 and KF-6048 (all manufactured by Shin-Etsu Chemical Co., Ltd.); BYK-306, BYK-307, BYK-310, BYK-333, BYK-344, BYK-345, BYK-346, BYK-347, BYK-348, BYK-349 and BYK-378 (all manufactured by BYK Japan KK); and DOWSIL(TM) 501W Additive, DOWSIL(TM) FZ-2104 Fluid, DOWSIL(TM) FZ-2110, DOWSIL(TM) FZ-2123, DOWSIL(TM) FZ-2164, DOWSIL(TM) FZ-2191, DOWSIL(TM) FZ-5609 Fluid, DOWSIL(TM) L-7001, DOWSIL(TM) L-7002, DOWSIL(TM) L-7604, DOWSIL(TM) SH3746 Fluid, DOWSIL(TM) SH3771 Fluid, DOWSIL(TM) SH8400 Fluid, DOWSIL(TM) SF8410 Fluid, DOWSIL(TM) SF8700 Fluid, SYLGARD(TM) OFX-0309 Fluid, XIAMETER(TM) OFX-0193 Fluid, XIAMETER(TM) OFX-5211 Fluid and DOWSIL(TM) Y-7006 (all manufactured by Dow Toray Co.,Ltd).

Examples of the amphoteric surfactant include 2-alkyl-N-carboxymethyl-N-hydroxyethylimidazolinium betaine and lauramidopropyl betaine.

[Other components]

The inorganic fine particle dispersion may contain silica other than the inorganic fine particle X and the inorganic fine particles Y The inorganic fine particle dispersion may contain an organic electrolyte and an additive. In addition, the dispersion may contain a thickener, a thixotropic agent, an antifoaming agent, a photostabilizer, a pigment, an antifungal agent, a dust-proofing agent, an antifreeze performance improver, a weather-proofing agent, an ultraviolet stabilizer and the like, depending on the application, the usage method or the like.

When the inorganic fine particle dispersion contains an organic electrolyte, the amount of the organic electrolyte contained is usually 0.01 parts by weight or less per 100 parts by weight of the liquid dispersion medium. The organic electrolyte in the present invention refers to an organic compound (excluding a surfactant) having an ionizing ionic group. Examples thereof include sodium p-toluenesulfonate, sodium benzenesulfonate, potassium butylsulfonate, sodium phenylphosphinate and sodium diethylphosphate. The organic electrolyte is preferably a benzenesulfonic acid derivative.

When the inorganic fine particle dispersion contains an additive, for example, the inorganic fine particles can be surface-treated with an appropriate additive. Examples of the additive include an additive having a polar group, such as a hydroxy group, an oxy group, a carbonyl group, a carboxyl group and an epoxy group, and the additive can form a hydrogen bond or a covalent bond to the inorganic fine particles via the polar group. Examples of the additive include a polycarboxylic acid and a salt thereof, a polymeric unsaturated acid ester, a modified or unmodified polyurethane, a modified or unmodified polyester, a modified or unmodified poly(methacrylate), a (meth)acrylic acid copolymer, a polyoxyethylene alkyl phosphate ester, an alkoxysilane mentioned as the component (C), as well as an alkoxysilane condensate, and an acrylic-urethane resin. Since a polymeric additive is adsorbed onto the surface of the inorganic fine particles, which acts to prevent re-aggregation, an additive having an anchoring site to the particle surface is preferred. Examples of a preferred structure include a terminal-modified polymer, a graft polymer and a block polymer. The surface treatment of the inorganic fine particles can be performed, for example, by mixing a liquid containing the inorganic fine particles, an additive and a solvent.

<Method for producing inorganic fine particle dispersion>

The inorganic fine particle dispersion can be prepared, for example, by combining some or all of the following [Step 1] to [Step 10] in an arbitrary order, but is not limited to these methods.

[Step 1] Step of obtaining dispersion of inorganic fine particle X. The dispersion of the inorganic fine particle X is obtained by, for example, hydrolysis and/or condensation of a metal alkoxide, hydrolysis of a metal salt, grinding and/or disintegration of a metal oxide, precipitation of an aqueous metal salt solution, hydrothermal treatment of an aqueous metal salt solution, and a treatment of mixing, stirring and dispersing the inorganic fine particle X in a liquid dispersion medium. A commercially available dispersion of the inorganic fine particle X can also be used.

[Step 2] Step of obtaining dispersion of inorganic fine particle Y. The dispersion of the inorganic fine particle Y is obtained by, for example, hydrolysis and/or condensation of a metal alkoxide, hydrolysis of a metal salt, grinding and/or disintegration of a metal oxide, precipitation of an aqueous metal salt solution, hydrothermal treatment of an aqueous metal salt solution, and a treatment of mixing, stirring and dispersing the inorganic fine particle Y in a liquid dispersion medium. A commercially available dispersion of the inorganic fine particle Y can also be used.

[Step 3] Step of obtaining first dispersion. However, the first dispersion contains the inorganic fine particle X and a first liquid dispersion medium. The first dispersion may contain, if necessary, the inorganic fine particle Y, the liquid dispersion medium A, the liquid dispersion medium B, water, the component C, a surfactant or other components contained in the inorganic fine particle dispersion. In this case, the content of these components may be the total amount or a partial amount contained in the inorganic fine particle dispersion. The first dispersant may be composed of a single liquid dispersion medium or a mixture of a plurality of liquid dispersion media and the like.

[Step 4] Step of obtaining second dispersion. However, the second dispersion contains the inorganic fine particle Y and a second liquid dispersion medium. The second dispersion may contain, if necessary, the inorganic fine particle X, the liquid dispersion medium A, the liquid dispersion medium B, water, the component C, a surfactant or other components contained in the inorganic fine particle dispersion. In this case, the content of these components may be the total amount or a partial amount contained in the inorganic fine particle dispersion. The second dispersant may be composed of a single liquid dispersion medium or a mixture of a plurality of liquid dispersion media and the like.

[Step 5] Step of obtaining third dispersion. However, the third dispersion contains the component C and a third liquid dispersion medium. The third dispersion may contain, if necessary, the inorganic fine particle X, the inorganic fine particle Y, the liquid dispersion medium A, the liquid dispersion medium B, water, a surfactant or other components contained in the inorganic fine particle dispersion. In this case, the content of these components may be the total amount or a partial amount contained in the inorganic fine particle dispersion. The third dispersant may be composed of a single liquid dispersion medium or a mixture of a plurality of liquid dispersion media and the like.

[Step 6] Step of obtaining fourth dispersion. However, the fourth dispersion contains a surfactant and a fourth liquid dispersion medium. The fourth dispersion may contain, if necessary, the inorganic fine particle X, the inorganic fine particle Y, the liquid dispersion medium A, the liquid dispersion medium B, water, a surfactant, the component C or other components contained in the inorganic fine particle dispersion. In this case, the content of these components may be the total amount or a partial amount contained in the inorganic fine particle dispersion. The fourth dispersant may be composed of a single liquid dispersion medium or a mixture of a plurality of liquid dispersion media and the like.

[Step 7] Step of obtaining fifth dispersion. However, the fifth dispersion contains the liquid dispersion medium A and a fifth liquid dispersion medium. The fifth dispersion may contain, if necessary, the inorganic fine particle X, the inorganic fine particle Y, the liquid dispersion medium B, water, the component C, a surfactant or other components contained in the inorganic fine particle dispersion. In this case, the content of these components may be the total amount or a partial amount contained in the inorganic fine particle dispersion. The fifth dispersant may be composed of a single liquid dispersion medium or a mixture of a plurality of liquid dispersion media and the like.

[Step 8] Step of obtaining sixth dispersion. However, the sixth dispersion contains the liquid dispersion medium B and a sixth liquid dispersion medium. The sixth dispersion may contain, if necessary, the inorganic fine particle X, the inorganic fine particle Y, the liquid dispersion medium A, water, the component C, a surfactant or other components contained in the inorganic fine particle dispersion. In this case, the content of these components may be the total amount or a partial amount contained in the inorganic fine particle dispersion. The sixth dispersant may be composed of a single liquid dispersion medium or a mixture of a plurality of liquid dispersion media and the like.

[Step 9] Step of obtaining seventh dispersion. However, the seventh dispersion contains water and a seventh liquid dispersion medium. The seventh dispersion may contain, if necessary, the inorganic fine particle X, the inorganic fine particle Y, the liquid dispersion medium A, the liquid dispersion medium B, the component C, a surfactant or other components contained in the inorganic fine particle dispersion. In this case, the content of these components may be the total amount or a partial amount contained in the inorganic fine particle dispersion. The seventh dispersant may be composed of a single liquid dispersion medium or a mixture of a plurality of liquid dispersion media and the like. [Step 10] Step of obtaining eighth dispersion. However, the eighth dispersion liquid contains the other components contained in the inorganic fine particle dispersion and an eighth liquid dispersion medium. The fourth dispersion may contain, if necessary, the inorganic fine particle X, the inorganic fine particle Y, the liquid dispersion medium A, the liquid dispersion medium B, water, the component C or a surfactant. In this case, the content of these components may be the total amount or a partial amount contained in the inorganic fine particle dispersion. The eighth dispersant may be composed of a single liquid dispersion medium or a mixture of a plurality of liquid dispersion media and the like.

In the above-mentioned [Step 1] to [Step 10] and other optional steps of preparing the inorganic fine particle dispersion, the inorganic fine particles can be particularly uniformly dispersed in the inorganic fine particle dispersion by applying a strong dispersion method such as ultrasonic dispersion or ultrahigh-pressure dispersion.

In order to achieve more uniform dispersion, the inorganic fine particles are preferably in a colloidal state in the dispersion of the inorganic fine particle X or the dispersion of the inorganic fine particle Y used in the preparation of the inorganic fine particle dispersion or in the finally obtained inorganic fine particle dispersion. Water or a volatile organic solvent can be used as the dispersion medium.

In the above-mentioned [Step 1] to [Step 10] and other optional steps of preparing the inorganic fine particle dispersion, when the dispersion of the inorganic fine particle X, the dispersion of the inorganic fine particle Y, or both the dispersion of the inorganic fine particles X and the dispersion of the inorganic fine particles Y are colloidal alumina, it is preferable to add an anion, such as a chlorine ion, a sulfate ion and an acetate ion, into the colloidal alumina as a counter anion in order to stabilize positively charged alumina particles. The pH of the colloidal alumina is not particularly limited but is preferably pH of 2 to 6, from the viewpoint of the stability of the inorganic fine particle dispersion.

In the above-mentioned [Step 1] to [Step 10] and other optional steps of preparing the inorganic fine particle dispersion, when at least one of the inorganic fine particle X and the inorganic fine particle Y is alumina and the dispersion of the inorganic fine particle X or the inorganic fine particle Y or the inorganic fine particle dispersion is in a colloidal state, it is preferable to add an anion, such as a chlorine ion, a sulfate ion and an acetate ion to the dispersion.

In the above-mentioned [Step 1] to [Step 10] and other optional steps of preparing the inorganic fine particle dispersion, when the dispersion of the inorganic fine particle X, the dispersion of the inorganic fine particle Y, or both the dispersion of the inorganic fine particles X and the dispersion of the inorganic fine particles Y are dispersions of colloidal silica, it is preferable to add a cation, such as an ammonium ion, an alkali metal ion and a alkaline-earth metal ion, to the colloidal silica as a counter cation in order to stabilize negatively charged silica particles. The pH of the colloidal silica is not particularly limited.

Furthermore, in the above-mentioned [Step 1] to [Step 10] and other optional steps of preparing the inorganic fine particle dispersion, when at least one of the inorganic fine particle X and the inorganic fine particle Y is silica and the dispersion of the inorganic fine particle X or the inorganic fine particle Y or the inorganic fine particle dispersion is in a colloidal state, it is preferable to add a cation, such as an ammonium ion, an alkali metal ion or an alkaline-earth metal ion to the dispersion.

A preferred aspect of the case where the inorganic fine particle dispersion contains the component C is a method of preparing the inorganic fine particle dispersion by separately preparing an agent A and an agent B described below and mixing the agent A and the agent B immediately before coating, from the viewpoint of stably storing and managing the coating agents for a long period of time.

[Agent A]: The agent contains inorganic fine particles and water and may optionally contain the liquid dispersion medium A, the liquid dispersion medium B, a surfactant and other components.

[Agent B]: The agent contains the component C and may appropriately contain the liquid dispersion medium A, the liquid dispersion medium B, water, a surfactant and other components.

The agent A contains inorganic fine particles and water and may optionally contain the liquid dispersion medium A, the liquid dispersion medium B, a surfactant and other components.

The content of the inorganic fine particles in the agent A is preferably 0.2% by mass or more and 30% by mass or less, more preferably 0.3% by mass or more and 20% by mass or less, and even more preferably 0.5% by mass or more and 15% by mass or less when the total weight of the agent A is 100% by mass.

The lower limit of the content of water in the agent A is preferably 1% by mass or more, more preferably 5% by mass or more, even more preferably 10% by mass or more, and still more preferably 15% by mass or more when the total weight of the agent A is 100% by mass.

The upper limit thereof is preferably 90% by mass or less, more preferably 80% by mass or less, even more preferably 60% by mass or less, still more preferably 50% by mass or less, still more preferably 40% by mass or less, and still more preferably 30% by mass or less.

The agent B contains the component C and may appropriately contain the liquid dispersion medium A, the liquid dispersion medium B, water, a surfactant and other components. As the agent B, the component C alone can be used as it is. In addition, the agent B may be a composition containing the component C, and further appropriately containing the liquid dispersion medium A, the liquid dispersion medium B, water, a surfactant and other components.

The content of water in the agent B is preferably small, and is preferably 5 wt% or less, more preferably 3 wt% or less, even more preferably 1 wt% or less, and particularly preferably 0.8 wt% or less when the total amount of the agent B is 100% by mass.

In the case where the agent B is a composition as described above, the content of the component C is 0.002 to 99.9% by mass, more preferably 0.5 to 95% by mass, even more preferably 1 to 60% by mass, still more preferably 3 to 40% by mass, still more preferably 3 to 20% by mass, and still more preferably 3 to 15% by mass, when the total weight of the agent B is 100 mass%.

[Method for producing laminate]

A laminate including a base material and an inorganic fine particle layer can be obtained by a method including a step of applying an inorganic fine particle dispersion onto a base material (application step) and then a step of removing a liquid dispersion medium from the inorganic fine particle dispersion applied onto the base material in an appropriate manner to form an inorganic fine particle layer (hereinafter, also referred to as a "coating film") on the base material (dispersion medium removal step).

<Method of applying onto base material>

The method of applying the inorganic fine particle dispersion onto the base material is not particularly limited, and examples thereof include gravure coating, reverse coating, brush roll coating, spray coating, kiss coating, die coating, dipping and bar coating.

Examples of the base material include a plastic film or sheet and a glass plate. Specific examples of the plastic film or sheet include a film or sheet of polyethylene terephthalate, polyethylene, polypropylene, cellophane, triacetyl cellulose, diacetyl cellulose, acetyl cellulose butyrate, polymethyl methacrylate, polycarbonate, polystyrene, MS resin, SAN resin and silicone resin. A film or sheet made of triacetyl cellulose or polyethylene terephthalate and a glass plate are preferred because they are excellent in transparency and have no optical anisotropy. In addition, an optical member such as a polarizing plate, a diffusion plate, a light guide plate, a brightness enhancement film and a reflective polarizing plate can also be used as a base material. The base material may have a hard coat layer made of an ultraviolet curable resin or the like or an antistatic layer containing conductive fine particles or the like as a surface layer.

When glass is used as the base material, the composition, production method and the like of glass that can be used are not particularly limited. Soda glass, crystal glass, borosilicate glass, quartz glass, aluminosilicate glass, borate glass, phosphate glass, alkali-free glass, composite glass with ceramics and the like can be used.

Before applying the inorganic fine particle dispersion onto the base material, the surface of the base material may be subjected to a pretreatment such as a corona treatment, an ozone treatment, a plasma treatment, a flame treatment, an electron beam treatment, an anchor coat treatment and a washing treatment.

<Method of removing liquid dispersion medium>

An inorganic fine particle layer can be formed on the surface of the base material by removing the liquid dispersion medium from the inorganic fine particle dispersion applied onto the surface of the base material (dispersion medium removal step). The removal of the liquid dispersion medium can be performed, for example, by heating under normal pressure or reduced pressure after natural drying at room temperature.

The pressure and heating temperature during removal of the liquid dispersion medium can be appropriately selected according to materials used (i.e., the inorganic fine particle X, the inorganic fine particle Y and the liquid dispersion medium). For example, the drying can be performed generally at 50°C or more and 120°C or less and preferably at about 60°C or more and 110°C or less. In an aspect, the drying can be performed at 50°C or more and 80°C or less, and in another aspect, the drying can be performed at 20°C or more and 50°C or less.

After the liquid dispersion medium is removed by the drying, the base material having the inorganic fine particle layer formed on the surface thereof can be further subjected to heat treatment to improve the adhesion between the base material and the inorganic fine particle layer (heat treatment step). The heat treatment method is not particularly limited, and examples thereof include heating with an oven and local heating of the inorganic fine particle layer by electromagnetic wave irradiation.

In the case where heat treatment is further performed after the drying (heat treatment step), the heating temperature, atmosphere and heating time are not particularly limited. The heat treatment temperature is preferably 500°C or more and 800°C or less.

The atmosphere during heating is preferably air. The heating time is preferably 10 minutes or less.

In one embodiment of the inorganic fine particle dispersion of the present invention, the inorganic fine particle dispersion may be applied to a glass base material before a quenching step in the production of the glass base material, and the glass base material coated with the inorganic fine particle dispersion may be quenched as it is.

[Laminate]

In one aspect, the inorganic fine particle layer of a laminate including the base material and the inorganic fine particle layer, which was obtained by the above method, has an antireflection function. The thickness of the inorganic fine particle layer is not particularly limited. In one aspect, the inorganic fine particle layer has a thickness of 40 nm or more and 300 nm or less; in another aspect, the inorganic fine particle layer has a thickness of 50 nm or more and 240 nm or less; in another aspect, the inorganic fine particle layer has a thickness of 50 nm or more and 220 nm or less; in another aspect, the thickness is 80 nm or more and 200 nm or less; in another aspect, the thickness is 50 nm or more and 150 nm or less; and in another aspect, the thickness is 80 nm or more and 130 nm or less.

The thickness of the inorganic fine particle layer is preferably 50 nm or more and 240 nm or less, more preferably 50 nm or more and 220 nm or less, and even more preferably 80 nm or more and 200 nm or less. The thickness of the inorganic fine particle layer can be adjusted by changing the amounts of the inorganic fine particle X and the inorganic fine particle Y in the inorganic fine particle dispersion and the amount of the inorganic fine particle dispersion applied.

An antifouling layer made of a fluorine compound or the like may be further formed on the inorganic fine particle layer formed by applying the inorganic fine particle dispersion. A method for the formation of the antifouling layer include dip-coating.

Hereinafter, the present invention will be described in more detail with reference to Examples and Comparative Examples, but the present invention is not limited to Examples.

The main materials used are as follows.

[Base material]

Slide glass (manufactured by AS ONE CORPORATION; soda-lime glass; transmission: 89%; width: 26 mm, length: 76 mm, thickness: 1.3 mm). The slide glass having a transmittance of 89% is referred to as a Base material-1.

Slide glass (transmission: 88.6%; width: 26 mm, length: 76 mm, thickness: 1.3 mm). The slide glass having a transmittance of 88.6% is referred to as a Base material-2.

The transmittance value of the slide glass used as the base material was measured by the method described in the section of [Transmittance] in Examples below.

[Inorganic fine particle]

As the inorganic fine particles, the following dispersions were used.

Particle-1(inorganic fine particle Y): SNOWTEX (R) ST-OUP (manufactured by Nissan Chemical Corporation; aqueous dispersion of colloidal silica fine particle chain in which three or more particles having a particle diameter of 5 nm or more and 20 nm or less are connected in a chain form; average particle diameter by dynamic light scattering method: 40 nm or more and 300 nm or less; solid concentration: 15% by weight)

Particle-2 (inorganic fine particle X): SNOWTEX(R) ST-OXS (manufactured by Nissan Chemical Corporation; aqueous dispersion of colloidal silica; average particle diameter: 4 nm or more and 6 nm or less; solid concentration: 10% by weight)

Note that the numerical value of the amount of the inorganic fine particles added in Table 1-1, Table 1-2 and Table 1-3 is the amount of the solid concentration added when the total amount of the composition (total amount of the dispersion) is 100% by mass.

[Liquid dispersion medium A]

As the liquid dispersion medium A, the following was used.

Liquid A-1: 2-methoxyethyl acetate (boiling point: 143°C)
Liquid A-2: 4-methyl-2-pentanone (boiling point: 116°C)
LiquidA-3: 1-methoxy-2-propanol (boiling point: 120°C)
Liquid A-4: 4-ethylmorpholine (boiling point: 139°C)
Liquid A-5: isoamyl acetate(boiling point: 141°C)

Liquid A-6: propylene glycol 1-monomethyl ether 2-acetate (boiling point: 146°C)
Liquid A-7: 1-propoxy-2-propanol (boiling point: 149°C)
Liquid A-8: N, N-dimethylformamide (boiling point: 153°C)
Liquid A-9: 2-ethoxyethyl acetate (boiling point: 156°C)
Liquid A-10: dimethyl sulfoxide (boiling point: 189°C)
Liquid A-11: γ-butyrolactone (boiling point: 204°C) (Comparative Example)
Liquid A-12: ethylene carbonate (boiling point: 244°C) (Comparative Example)
Liquid A-13: 1,6-diacetoxyhexane (boiling point: 260°C) (Comparative Example)
Liquid A-14: dipropylene glycol dimethyl ether (boiling point: 175°C)
Liquid A-15: tetrahydrofurfuryl alcohol (boiling point: 176°C)
Liquid A-16: 3-methoxy-3-methylbutanol (boiling point: 174°C)
Liquid A-17: 3-methoxy-1-butanol (boiling point: 158°C)
Liquid A-18: 1-butanol (boiling point: 118°C)

[Liquid dispersion medium B]

Liquid B-1: ethanol (boiling point: 78°C)
Liquid B-2: isopropyl alcohol (boiling point: 82°C)

[Component C, surfactant, other component and the like]

Component-1: BYK(R)-349 (manufactured by BYK Japan KK; polyether-modified siloxane)
Component-2: a dispersion of an alkoxysilane condensate having a plurality of Si-O-Si bonds three-dimensionally connected (peak top molecular weight of the alkoxysilane condensate: 700; content of the alkoxysilane condensate in the dispersion: 2 wt%; more than half of the terminals of the alkoxysilane condensate are hydroxyl groups; an acrylic-urethane resin is contained as an additive) Hereinafter, the alkoxysilane condensate in the Component-2 is sometimes referred to as a "component C-3".
Component-3: Silquest(R) A-187J (manufactured by Momentive Performance Materials Japan LLC; γ-glycidoxypropyltrimethoxysilane)
Component-4: MKC Silicate(R) MS56S (manufactured by Mitsubishi Chemical Corporation; polymethoxysiloxane)

In Examples and Comparative Examples, a laminate composed of a glass base material and an inorganic fine particle layer was produced by a method described below. Examples 1 to 29 and Comparative Examples 1 to 8.

A mixture of the inorganic fine particles, the liquid dispersion medium A, the liquid dispersion medium B, water, the component C, the surfactant, other components and the like was stirred so as to have a component ratio described in Table 1-1, Table 1-2 and Table 1-3, thereby preparing an inorganic fine particle dispersion. Then, the base material was prepared by masking one side thereof with a masking tape. A Base material-1 was used here as the base material.

Using a Microspeed dip coater MD-0408-01 (manufactured by SDI Co., Ltd.), the prepared inorganic fine particle dispersion was applied onto an unmasked surface side of the base material subjected to the masking treatment. After the application, the masking tape was removed from the base material and the base material was naturally dried at room temperature. The resulting base material was subjected to a heat treatment under air at 100° C for 3 minutes using an oven and then subjected to a heat treatment under air at 700° C for 2 minutes using a muffle furnace to form an inorganic fine particle layer on the base material, thereby obtaining a laminate composed of the base material and the inorganic fine particle layer.

Examples 30 to 32

A mixture of the inorganic fine particles, the liquid dispersion medium A, the liquid dispersion medium B and the component -1 was stirred so as to have a component ratio described in Table 1-4, and then the Component-4 was added and stirred to prepare an inorganic fine particle dispersion. In addition, the base material was prepared by masking one side thereof with a masking tape. The Base material-2 was used here as the base material.

Using a Microspeed dip coater MD-0408-01 (manufactured by SDI Co., Ltd.), the prepared inorganic fine particle dispersion was immediately applied onto an unmasked surface side of the base material subjected to the masking treatment. After the application, the masking tape was removed from the base material, and the base material was naturally dried at room temperature. The resulting base material was subjected to a heat treatment under air at 100° C for 3 minutes using an oven, and then subjected to a heat treatment under air at 700° C for 2 minutes using a muffle furnace to form an inorganic fine particle layer on the base material, thereby obtaining a laminate composed of the base material and the inorganic fine particle layer. The results are summarized in Table 1-4.

Example 33

The inorganic fine particle dispersion (100.0% by mass) was prepared as described below. A mixture of the particle-1 and the particle-2 was prepared so that the value of (mass of inorganic fine particle Y)/[(mass of inorganic fine particle X) + (mass of inorganic fine particle Y)] was 0.75 and the silica solid content was 2.59% by mass. The resulting mixture of the particle-1 and the particle-2, the liquid dispersion medium A (1.30% by mass), liquid dispersion medium B (71.19% by mass) and the Component-1 (0.25% by mass) were stirred. Next, a mixture of the Component-4 (0.39% by mass) and the liquid dispersion medium B (7.48% by mass) was added to the resulting stirred product, and the mixture was stirred to prepare an inorganic fine particle dispersion (100.0% by mass). Using the resulting inorganic fine particle dispersion, a laminate composed of a base material and an inorganic fine particle layer was obtained in the same manner as in Example 30. The results are summarized in Table 1-4.

Example 34

The inorganic fine particle dispersion (100.0% by mass) was prepared as described below. A mixture of the particle-1 and the particle-2 was prepared so that the value of (mass of inorganic fine particle Y)/[(mass of inorganic fine particle X) + (mass of inorganic fine particle Y)] was 0.75 and the silica solid content was 2.59% by mass. The resulting mixture of the particle-1 and the particle-2, the liquid dispersion medium A (5.18% by mass), liquid dispersion medium B (67.31% by mass) and the Component-1 (0.25% by mass) were mixed and stirred. Next, a mixture of the Component-4 (0.39% by mass) and the liquid dispersion medium B (7.48% by mass) was added to the resulting stirred product, and the mixture was stirred to prepare an inorganic fine particle dispersion (100.0% by mass). Using the resulting inorganic fine particle dispersion, a laminate composed of a base material and an inorganic fine particle layer was obtained in the same manner as in Example 30. The results are summarized in Table 1-4.

Example 35

The inorganic fine particle dispersion (100.0% by mass) was prepared as described below. The particle-1 and the particle-2 were weighed so that the value of (mass of inorganic fine particle Y)/[(mass of inorganic fine particle X) + (mass of inorganic fine particle Y)] was 0.75 and the silica solid content was 2.59% by mass when the resulting inorganic fine particle dispersion was 100.0% by mass to prepare a mixture thereof. The resulting mixture of the particle-1 and the particle-2, the liquid dispersion medium A (10.35% by mass), liquid dispersion medium B (62.14% by mass) and the Component-1 (0.25% by mass) were stirred. Next, a mixture of the liquid dispersion medium B (7.48% by mass) and the Component-4 (0.39% by mass) was added to the resulting stirred product, and the mixture was stirred to prepare an inorganic fine particle dispersion (100.0% by mass). Using the resulting inorganic fine particle dispersion, a laminate composed of a base material and an inorganic fine particle layer was obtained in the same manner as in Example 30. The results are summarized in Table 1-4.

Example 36

A mixture of the inorganic fine particles, the liquid dispersion medium, A, the liquid dispersion medium B and the component -1 was stirred so as to have a component ratio described in Table 1-4, and then the Component-4 was added and stirred to prepare an inorganic fine particle dispersion. Using the resulting inorganic fine particle dispersion, a laminate composed of a base material and an inorganic fine particle layer was obtained in the same manner as in Example 30. The results are summarized in Table 1-4.

Example 37

A mixture of the inorganic fine particles, the liquid dispersion medium, A, the liquid dispersion medium B and the component -1 was stirred so as to have a component ratio described in Table 1-4, and then the Component-4 was added and stirred to prepare an inorganic fine particle dispersion. In addition, the base material was prepared by masking one side thereof with a masking tape. The Base material-2 was used here as the base material.
Using a Microspeed dip coater MD-0408-01 (manufactured by SDI Co., Ltd.), the prepared inorganic fine particle dispersion was immediately applied onto an unmasked surface side of the base material subjected to the masking treatment. After the application, the masking tape was removed from the base material, and the base material was naturally dried at room temperature. The resulting base material was subjected to a heat treatment under air at 100°C for 3 minutes using an oven, and then subjected to a heat treatment under air at 700°C for 2 minutes using a muffle furnace to form an inorganic fine particle layer on the base material, thereby obtaining a laminate composed of the base material and the inorganic fine particle layer. The results are summarized in Table 1-4.

Example 38

The inorganic fine particle dispersion (100.0% by mass) was prepared as described below. The particle-1 and the particle-2 were weighed so that the value of (mass of inorganic fine particle Y)/[(mass of inorganic fine particle X) + (mass of inorganic fine particle Y)] was 0.75 and the silica solid content was 2.59% by mass to prepare a mixture thereof. The resulting mixture of the particle-1 and the particle-2, the liquid dispersion medium A (5.18% by mass), liquid dispersion medium B (67.31% by mass) and the Component-1 (0.25% by mass) were mixed and stirred. A mixture of the liquid dispersion medium B (7.48% by mass) and the Component-4 (0.39% by mass) was added to the resulting stirred product, and the mixture was stirred to prepare an inorganic fine particle dispersion (100.0% by mass). Using the resulting inorganic fine particle dispersion, a laminate composed of a base material and an inorganic fine particle layer was obtained in the same manner as in Example 30. The results are summarized in Table 1-4.

Example 39

The inorganic fine particle dispersion (100.0% by mass) was prepared as described below. The particle-1 and the particle-2 were weighed so that the value of (mass of inorganic fine particle Y)/[(mass of inorganic fine particle X) + (mass of inorganic fine particle Y)] was 0.75 and the silica solid content was 2.59 parts by weight to prepare a mixture thereof. The resulting mixture of the particle-1 and the particle-2, the liquid dispersion medium A (5.18% by mass) and liquid dispersion medium B (67.55% by mass) were mixed and stirred. A mixture of the liquid dispersion medium B (7.24% by mass), the Component-1 (0.25% by mass) and the Component-4 (0.39% by mass) was added to the resulting stirred product, and the mixture was stirred to prepare an inorganic fine particle dispersion (100.0% by mass). Using the resulting inorganic fine particle dispersion, a laminate composed of a base material and an inorganic fine particle layer was obtained in the same manner as in Example 30. The results are summarized in Table 1-4.

Example 40

The inorganic fine particle dispersion (100.0% by mass) was prepared as described below. The particle-1 and the particle-2 were weighed so that the value of (mass of inorganic fine particle Y)/[(mass of inorganic fine particle X) + (mass of inorganic fine particle Y)] was 0.75 and the silica solid content was 2.59% by mass to prepare a mixture thereof. The resulting mixture of the particle-1 and the particle-2, the liquid dispersion medium A (1.43% by mass) and liquid dispersion medium B (29.20% by mass) were mixed and stirred. A mixture of the liquid dispersion medium A (3.75% by mass), the liquid dispersion medium B (45.59% by mass), the Component-1 (0.25% by mass) and the Component-4 (0.39% by mass) was added to the resulting stirred product, and the mixture was stirred to prepare an inorganic fine particle dispersion (100.0% by mass). Using the resulting inorganic fine particle dispersion, a laminate composed of a base material and an inorganic fine particle layer was obtained in the same manner as in Example 30. The results are summarized in Table 1-4.

Examples 41 to 48

A mixture of the inorganic fine particles, the liquid dispersion medium A, the liquid dispersion medium B and the component -1 was stirred so as to have a component ratio described in Table 1-4 and Table 1-5, and then the Component-4 was added and stirred to prepare an inorganic fine particle dispersion. In addition, the base material was prepared by masking one side thereof with a masking tape. The Base material-2 was used here as the base material.

Using a Microspeed dip coater MD-0408-01 (manufactured by SDI Co., Ltd.), the prepared inorganic fine particle dispersion was immediately applied onto an unmasked surface side of the base material subjected to the masking treatment. After the application, the masking tape was removed from the base material, and the base material was naturally dried at room temperature. The resulting base material was subjected to a heat treatment under air at 100°C for 3 minutes using an oven, and then subjected to a heat treatment under air at 700°C for 2 minutes using a muffle furnace to form an inorganic fine particle layer on the base material, thereby obtaining a laminate composed of the base material and the inorganic fine particle layer. The results are summarized in Table 1-4 and Table 1-5.

Examples and Comparative Examples were evaluated by methods below.

[Spectral transmittance]

The total light transmittance of the laminate composed of the base material and the inorganic fine particle layer was measured using an ultraviolet-visible-near-infrared spectrophotometer UV-3150 (manufactured by Shimadzu Corporation). Thereafter, values of the total light transmittance in the wavelength range of 380 nm to 1100 nm were read from the resulting total light transmittance spectrum to calculate the average value.
The resulting laminate exhibited an increase in spectral transmittance relative to the uncoated base material.
The amount of increase in spectral transmittance was defined as follows:

$$[\text{Amount of increase in spectral transmittance (\%)}]$$

$$= [\text{Spectral transmittance (\%) of laminate}] - [\text{Spectral transmittance (\%) of uncoated base material}]$$

[Coating film strength] (adhesion of coating film to base material)

Cellotape(R) LP-24 (manufactured by Nichiban Co., Ltd.) was attached to the surface of the laminate composed of the base material and the inorganic fine particle layer, on which the inorganic fine particle layer was present, and the Cellotape was peeled off. At this time, if the adhesive component of the Cellotape transferred to the surface on which the inorganic fine particle layer was present, the adhesion of the inorganic fine particle layer to the base material was considered extremely strong, and the evaluation in this case was expressed as "◎". In the case where the adhesive component of the Cellotape did not transfer to the surface on which the inorganic fine particle layer was present and the reflection peculiar to the inorganic fine particle layer did not occur when the base material was irradiated with a light beam, the inorganic fine particles transferred to the Cellotape, and thus the adhesion of the inorganic fine particle layer to the base material was considered weak. The evaluation in that case was expressed as "×". Furthermore, in the case where the adhesive component of the Cellotape did not transfer to the surface on which the inorganic fine particle layer had been present and reflection peculiar to the inorganic fine particle layer occurred, it was considered that the inorganic fine particle layer adhered closely to the base material, but the adhesion was not as strong as in the case of "◎", and the evaluation in that case was expressed as "O".

[Storage stability of inorganic fine particle dispersion]

The inorganic fine particle dispersions in Examples and Comparative Examples were stored in an oven under air at 40°C for 28 days to confirm the storage stability of the inorganic fine particle dispersions. As a result, the storage stability was considered good when the dispersions remained in a liquid form, and the evaluation in this case was "O". In addition, the storage stability was considered poor when gelation occurred, and the evaluation in this case was "×". In Examples 1 to 48 (and Comparative Examples 1 to 7) listed in Table 1-1, Table 1-2, Table 1-3, Table 1-4, and Table 1-5, the storage stabilities were all "o".

[Table 1-1]

| | | | Example 1 | Example 2 | Example 3 | Example 4 | Example 5 | Example 6 | Example 7 |
|---|---|---|---|---|---|---|---|---|---|
| Inorganic fine particle dispersion | Inorganic fine particle | Type | Particle-1, 2 | Particle-1, 2 | Particle-1, 2 | Particle-1, 2 | Particle-1, 2 | Particle-2 | Particle-1, 2 |
| | | Addition amount [wt%] | 1.88 | 2.35 | 2.82 | 3.29 | 3.57 | 2.35 | 2.35 |
| | | (Mass of inorganic fine particle Y) /[ (Mass of inorganic fine particle X)] + (Mass of inorganic fine particle Y)] [wt%/wt%] | 0.75 | 0.75 | 0.75 | 0.75 | 0.75 | 0.00 | 0.30 |
| | Liquid dispersion medium A | Type | Liquid A-1 | Liquid A-1 | Liquid A-1 | Liquid A-1 | Liquid A-1 | Liquid A-1 | Liquid A-1 |
| | | Addition amount [wt%] | 3.1 | 4.7 | 4.7 | 5.5 | 6.0 | 4.7 | 4.7 |
| | Liquid dispersion medium B | Type | Liquid B-1 | Liquid B-1 | Liquid B-1 | Liquid B-1 | Liquid B-1 | Liquid B-1 | Liquid B-1 |
| | | Addition amount [wt%] | 71.7 | 69.6 | 69.1 | 67.8 | 67.0 | 60.3 | 60.3 |
| | Water | Addition amount [wt%] | 23.2 | 23.2 | 23.2 | 23.2 | 23.2 | 32.5 | 32.5 |
| | Surfactant | Type | Component-1 | Component-1 | Component-1 | Component-1 | Component-1 | Component-1 | Component-1 |
| | | Addition amount [wt%] | 0.1 | 0.2 | 0.2 | 0.2 | 0.2 | 0.2 | 0.2 |
| | Component C and other components | Type | - | - | - | - | - | - | - |
| | | Addition amount [wt%] | - | - | - | - | - | - | - |
| | Total | [wt%] | 100.0 | 100.0 | 100.0 | 100.0 | 100.0 | 100.0 | 100.0 |
| Glass substrate | | Type | Base material-1 | Base material-1 | Base material-1 | Base material-1 | Base material-1 | Base material-1 | Base material-1 |

(continued)

| | | Example 1 | Example 2 | Example 3 | Example 4 | Example 5 | Example 6 | Example 7 |
|---|---|---|---|---|---|---|---|---|
| Characteristics | Spectral transmittance (380-1100nm) [%] | 92.1 | 92.1 | 92.0 | 92.2 | 92.0 | 92.1 | 92.1 |
| | Coating film strength (tape peeling) [Qualitative] | ◎ | ◎ | ◎ | ◎ | ◎ | ◎ | ◎ |
| | Storage stability of liquid (gelling or not) [Qualitative] | ○ | ○ | ○ | ○ | ○ | ○ | ○ |
| | Amount of increase in spectral transmittance [%] | 3.1 | 3.1 | 3.0 | 3.2 | 3.0 | 3.1 | 3.1 |

[Table 1-1]

| | | | Example 8 | Example 9 | Example 10 | Example 11 | Example 12 | Example 13 | Example 14 |
|---|---|---|---|---|---|---|---|---|---|
| Inorganic fine particle dispersion | Inorganic fine particle | Type | Particle-1, 2 | Particle-1, 2 | Particle-1, 2 | Particle-1, 2 | Particle-1, 2 | Particle-1, 2 | Particle-1, 2 |
| | | Addition amount [wt%] | 2.35 | 2.35 | 2.35 | 2.35 | 2.35 | 2.35 | 2.35 |
| | | (Mass of inorganic fine particle Y) /[ (Mass of inorganic fine particle X)] + (Mass of inorganic fine particle Y)] [wt%/wt%] | 0.55 | 0.60 | 0.75 | 0.75 | 0.75 | 0.75 | 0.75 |
| | Liquid dispersion medium A | Type | Liquid A-1 | Liquid A-1 | Liquid A-1 | Liquid A-2 | Liquid A-3 | Liquid A-4 | Liquid A-5 |
| | | Addition amount [wt%] | 4.7 | 4.7 | 4.7 | 4.7 | 4.7 | 4.7 | 4.7 |
| | Liquid dispersion medium B | Type | Liquid B-1 | Liquid B-1 | Liquid B-1 | Liquid B-1 | Liquid B-1 | Liquid B-1 | Liquid B-1 |
| | | Addition amount [wt%] | 60.3 | 60.3 | 60.3 | 60.3 | 60.3 | 60.3 | 60.3 |
| | Water | Addition amount [wt%] | 32.5 | 32.5 | 32.5 | 32.5 | 32.5 | 32.4 | 32.5 |
| | Surfactant | Type | Component-1 | Component-1 | Component-1 | Component-1 | Component-1 | Component-1 | Component-1 |
| | | Addition amount [wt%] | 0.2 | 0.2 | 0.2 | 0.2 | 0.2 | 0.2 | 0.2 |
| | Component C and other components | Type | - | - | - | - | - | - | - |
| | | Addition amount [wt%] | - | - | - | - | - | - | - |
| | Total | [wt%] | 100.0 | 100.0 | 100.0 | 100.0 | 100.0 | 100.0 | 100.0 |
| Glass substrate | | Type | Base material-1 | Base material-1 | Base material-1 | Base material-1 | Base material-1 | Base material-1 | Base material-1 |

EP 4 316 806 A1

(continued)

| | | | Example 8 | Example 9 | Example 10 | Example 11 | Example 12 | Example 13 | Example 14 |
|---|---|---|---|---|---|---|---|---|---|
| Characteristics | Spectral transmittance (380-1100nm) | [%] | 92.0 | 92.1 | 91.9 | 92.1 | 92.0 | 92.2 | 92.0 |
| | Coating film strength (tape peeling) | [Qualitative] | ◎ | ◎ | ◎ | ◎ | ◎ | ◎ | ◎ |
| | Storage stability of liquid (gelling or not) | [Qualitative] | ○ | ○ | ○ | ○ | ○ | ○ | ○ |
| | Amount of increase in spectral transmittance | [%] | 3.0 | 3.1 | 2.9 | 3.1 | 3.0 | 3.2 | 3.0 |

[Table 1-2]

| | | | Example 15 | Example 16 | Example 17 | Example 18 | Example 19 | Example 20 | Example 21 |
|---|---|---|---|---|---|---|---|---|---|
| Inorganic fine particle dispersion | Inorganic fine particle | Type | Particle-1, 2 | Particle-1, 2 | Particle-1, 2 | Particle-1, 2 | Particle-1, 2 | Particle-1, 2 | Particle-1, 2 |
| | | Addition amount [wt%] | 2.35 | 2.35 | 2.35 | 2.35 | 2.35 | 2.35 | 2.35 |
| | | (Mass of inorganic fine particle Y) /[ (Mass of inorganic fine particle X)] + (Mass of inorganic fine particle Y)] [wt%/wt%] | 0.75 | 0.75 | 0.75 | 0.75 | 0.75 | 0.75 | 0.75 |
| | Liquid dispersion medium A | Type | Liquid A-6 | Liquid A-7 | Liquid A-8 | Liquid A-9 | Liquid A-10 | Liquid A-1 | Liquid A-1 |
| | | Addition amount [wt%] | 4.7 | 4.7 | 4.7 | 4.7 | 4.7 | 0.9 | 9.4 |
| | Liquid dispersion medium B | Type | Liquid B-1 | Liquid B-1 | Liquid B-1 | Liquid B-1 | Liquid B-1 | Liquid B-1 | Liquid B-1 |
| | | Addition amount [wt%] | 60.3 | 60.3 | 60.3 | 60.3 | 60.3 | 64.0 | 55.5 |
| | Water | Addition amount [wt%] | 32.5 | 32.5 | 32.5 | 32.5 | 32.5 | 32.5 | 32.5 |
| | Surfactant | Type | Component-1 | Component-1 | Component-1 | Component-1 | Component-1 | Component-1 | Component-1 |
| | | Addition amount [wt%] | 0.2 | 0.2 | 0.2 | 0.2 | 0.2 | 0.2 | 0.2 |
| | Component C and other components | Type | - | - | - | - | - | - | - |
| | | Addition amount [wt%] | - | - | - | - | - | - | - |
| | Total | [wt%] | 100.0 | 100.0 | 100.0 | 100.0 | 100.0 | 100.0 | 100.0 |
| Glass substrate | | Type | Base material-1 | Base material-1 | Base material-1 | Base material-1 | Base material-1 | Base material-1 | Base material-1 |

(continued)

| Characteristics | Spectral transmittance (380-1100nm) | [%] | Example 15 | Example 16 | Example 17 | Example 18 | Example 19 | Example 20 | Example 21 |
|---|---|---|---|---|---|---|---|---|---|
| | | | 91.9 | 92.0 | 92.0 | 92.1 | 92.0 | 91.9 | 91.9 |
| | Coating film strength (tape peeling) | [Qualitative] | ◎ | ◎ | ◎ | ◎ | ◎ | ◎ | ◎ |
| | Storage stability of liquid (gelling or not) | [Qualitative] | ○ | ○ | ○ | ○ | ○ | ○ | ○ |
| | Amount of increase in spectral transmittance | [%] | 2.9 | 3.0 | 3.0 | 3.1 | 3.0 | 2.9 | 2.9 |

[Table 1-2]

| Inorganic fine particle dispersion | | | | Example 22 | Example 23 | Example 24 | Example 25 | Comparative Example 1 |
|---|---|---|---|---|---|---|---|---|
| | Inorganic fine particle | Type | | Particle-1, 2 | Particle-1, 2 | Particle-1, 2 | Particle-1, 2 | Particle-1, 2 |
| | | Addition amount [wt%] | | 2.35 | 2.35 | 2.35 | 2.35 | 2.35 |
| | | (Mass of inorganic fine particle Y)/[(Mass of inorganic fine particle X)] + (Mass of inorganic fine particle Y)] [wt%/wt%] | | 0.75 | 0.75 | 0.75 | 0.75 | 0.75 |
| | Liquid dispersion medium A | Type | | Liquid A-1 | Liquid A-1 | Liquid A-1 | Liquid A-1 | Liquid A-11 |
| | | Addition amount [wt%] | | 4.7 | 4.7 | 4.7 | 4.7 | 4.7 |
| | Liquid dispersion medium B | Type | | Liquid B-2 | Liquid B-1 and Liquid B-2 | Liquid B-1 | Liquid B-1 | Liquid B-1 |
| | | Addition amount [wt%] | | 60.3 | 72.8 and 10.0 | 77.4 | 52.7 | 60.3 |
| | Water | Addition amount [wt%] | | 32.4 | 9.9 | 15.3 | 40.0 | 32.5 |
| | Surfactant | Type | | Component-1 | Component-1 | Component-1 | Component-1 | Component-1 |
| | | Addition amount [wt%] | | 0.2 | 0.2 | 0.2 | 0.2 | 0.2 |
| | Component C and other components | Type | | - | - | - | - | - |
| | | Addition amount [wt%] | | - | - | - | - | - |
| | Total | [wt%] | | 100.0 | 100.0 | 100.0 | 100.0 | 100.0 |
| Glass substrate | | Type | | Base material-1 | Base material-1 | Base material-1 | Base material-1 | Base material-1 |

| Characteristics | | | Example 22 | Example 23 | Example 24 | Example 25 | Comparative Example 1 |
|---|---|---|---|---|---|---|---|
| | Spectral transmittance (380-1100nm) | [%] | 91.9 | 92.2 | 92.2 | 92.0 | 91.7 |
| | Coating film strength (tape peeling) | [Qualitative] | ◎ | ◎ | ◎ | ◎ | ○ |
| | Storage stability of liquid (gelling or not) | [Qualitative] | ○ | ○ | ○ | ○ | ○ |
| | Amount of increase in spectral transmittance | [%] | 2.9 | 3.2 | 3.2 | 3.0 | 2.7 |

[Table 1-3]

| Inorganic fine particle dispersion | | | Comparative Example 2 | Comparative Example 3 | Comparative Example 4 | Comparative Example 5 | Comparative Example 6 | Comparative Example 7 |
|---|---|---|---|---|---|---|---|---|
| | Inorganic fine particle | Type | Particle-1, 2 | Particle-1, 2 | Particle-1, 2 | Particle-2 | Particle-1, 2 | Particle-1, 2 |
| | | Addition amount [wt%] | 2.35 | 2.35 | 2.35 | 2.35 | 2.59 | 2.59 |
| | | (Mass of inorganic fine particle Y) /[(Mass of inorganic fine particle X)] + (Mass of inorganic fine particle Y)] [wt%/wt%] | 0.75 | 0.75 | 1.00 | 0.00 | 0.75 | 0.75 |
| | Liquid dispersion medium A | Type | Liquid A-12 | Liquid A-13 | Liquid A-13 | Liquid A-13 | - | - |
| | | Addition amount [wt%] | 4.7 | 4.7 | 4.7 | 4.7 | - | - |
| | Liquid dispersion medium B | Type | Liquid B-1 | Liquid B-1 | Liquid B-1 | Liquid B-1 | Liquid B-1 | - |
| | | Addition amount [wt%] | 60.3 | 60.3 | 60.3 | 60.3 | 47.2 | - |
| | Water | Addition amount [wt%] | 32.5 | 32.5 | 32.5 | 32.5 | 50.0 | 97.2 |
| | Surfactant | Type | Component-1 | Component-1 | Component-1 | Component-1 | Component-1 | Component-1 |
| | | Addition amount [wt%] | 0.2 | 0.2 | 0.2 | 0.2 | 0.2 | 0.2 |
| | Component C and other components | Type | - | - | - | - | - | - |
| | | Addition amount [wt%] | - | - | - | - | - | - |
| | Total | [wt%] | 100.0 | 100.0 | 100.0 | 100.0 | 100.0 | 100.0 |
| Glass substrate | | Type | Base material-1 | Base material-1 | Base material-1 | Base material-1 | Base material-1 | Base material-1 |

(continued)

| Characteristics | | | Comparative Example 2 | Comparative Example 3 | Comparative Example 4 | Comparative Example 5 | Comparative Example 6 | Comparative Example 7 |
|---|---|---|---|---|---|---|---|---|
| | Spectral transmittance (380-1100nm) | [%] | 92.1 | 89.6 | 90.2 | 89.3 | 90.5 | 91.1 |
| | Coating film strength (tape peeling) | [Qualitative] | ○ | ◎ | ◎ | ◎ | ◎ | ◎ |
| | Storage stability of liquid (gelling or not) | [Qualitative] | ○ | ○ | ○ | ○ | ○ | ○ |
| | Amount of increase in spectral transmittance | [%] | 3.1 | 0.6 | 1.2 | 0.3 | 1.5 | 2.1 |

[Table 1-3]

| | | | Example 26 | Example 27 | Example 28 | Example 29 |
|---|---|---|---|---|---|---|
| Inorganic fine particle dispersion | Inorganic fine particle | Type | Particle-1, 2 | Particle-1, 2 | Particle-1, 2 | Particle-1, 2 |
| | | Addition amount [wt%] | 2.12 | 2.59 | 2.59 | 2.59 |
| | | (Mass of inorganicfine particle Y) /[ (Mass of inorganicfine particle X)] + (Mass of inorganicfine particle Y)] [wt%/wt%] | 0.75 | 0.75 | 0.75 | 0.75 |
| | Liquid dispersion medium A | Type | Liquid A-14 and Liquid A-18 | Liquid A-14 and Liquid A-18 | Liquid A-14 | Liquid A-14 |
| | | Addition amount [wt%] | 1.1 and 9.0 | 2.6 and 2.8 | 1.3 | 1.3 |
| | Liquid dispersion medium B | Type | Liquid B-1 and Liquid B-2 | Liquid B-1 and Liquid B-2 | Liquid B-1 | Liquid B-1 |
| | | Addition amount [wt%] | 62.1 and 7.2 | 71.4 and 2.2 | 78.5 | 78.8 |
| | Water | Addition amount [wt%] | 14.5 | 17.0 | 16.8 | 16.8 |
| | Surfactant | Type | Component-1 | Component-1 | Component-1 | Component-1 |
| | | Addition amount [wt%] | 0.2 | 0.4 | 0.4 | 0.4 |
| | Component C and other components | Type | Component C-3, Component-3, and acrylic urethane resin | Component C-3, Component-3, and acrylic urethane resin | Component-4 | Component-4 |
| | | Addition amount [wt%] | 0.36, 3.2, and 0.18 | 0.11, 0.8, and 0.06 | 0.41 | 0.1 |
| | Total | [wt%] | 100.0 | 100.0 | 100.0 | 100.0 |
| Glass substrate | | Type | Base material-1 | Base material-1 | Base material-1 | Base material-1 |

(continued)

| Characteristics | Spectral transmittance (380-1100nm) | [%] | 91.9 | 91.8 | 92.0 | 92.0 |
|---|---|---|---|---|---|---|
| | | | Example 26 | Example 27 | Example 28 | Example 29 |
| | Coating film strength (tape peeling) | [Qualitative] | ◎ | ◎ | ◎ | ◎ |
| | Storage stability of liquid (gelling or not) | [Qualitative] | ○ | ○ | ○ | ○ |
| | Amount of increase in spectral transmittance | [%] | 2.9 | 2.8 | 3.0 | 3.0 |

[Table 1-4]

| Inorganic fine particle dispersion | Inorganic fine particle | Type | Example 30 | Example 31 | Example 32 | Example 33 | Example 34 | Example 35 | Example 36 | Example 37 |
|---|---|---|---|---|---|---|---|---|---|---|
| | | | Particle-1, 2 | Particle-1, 2 | Particle-1, 2 | Particle-1, 2 | Particle-1, 2 | Particle-1, 2 | Particle-1, 2 | Particle-1, 2 |
| | | Addition amount [wt%] | 2.59 | 2.59 | 2.59 | 2.59 | 2.59 | 2.59 | 2.59 | 4.51 |
| | | Mass of inorganic fine particle Y) /[ (Mass of inorganic fine particle X)] + Mass of inorganic fine particle Y)] [wt%/wt%] | 0.75 | 0.75 | 0.75 | 0.75 | 0.75 | 0.75 | 0.75 | 0.75 |
| | Liquid dispersion medium A | Type | Liquid A-15 | Liquid A-15 | Liquid A-15 | Liquid A-16 | Liquid A-16 | Liquid A-16 | Liquid A-16 | Liquid A-16 |
| | | Addition amount [wt%] | 5.18 | 10.35 | 14.40 | 1.30 | 5.18 | 10.35 | 5.18 | 5.18 |
| | Liquid dispersion medium B | Type | Liquid B-1 | Liquid B-1 | Liquid B-1 | Liquid B-1 | Liquid B-1 | Liquid B-1 | Liquid B-1 | Liquid B-1 |
| | | Addition amount [wt%] | 74.64 | 69.47 | 65.42 | 78.67 | 74.79 | 69.62 | 74.79 | 60.08 |
| | Water | Addition amount [wt%] | 16.80 | 16.80 | 16.80 | 16.80 | 16.80 | 16.80 | 16.80 | 29.29 |
| | Surfactant | Type | Component-1 | Component-1 | Component-1 | Component-1 | Component-1 | Component-1 | Component-1 | Component-1 |
| | | Addition amount [wt%] | 0.35 | 0.35 | 0.35 | 0.25 | 0.25 | 0.25 | 0.25 | 0.25 |
| | Component C and other components | Type | Component-4 | Component-4 | Component-4 | Component-4 | Component-4 | Component-4 | Component-4 | Component-4 |
| | | Addition amount [wt%] | 0.44 | 0.44 | 0.44 | 0.39 | 0.39 | 0.39 | 0.39 | 0.69 |
| | Total | [wt%] | 100.0 | 100.0 | 100.0 | 100.0 | 100.0 | 100.0 | 100.0 | 100.0 |
| Glass substrate | | Type | Base material-2 | Base material-2 | Base material-2 | Base material-2 | Base material-2 | Base material-2 | Base material-2 | Base material-2 |

(continued)

| | | | Example 30 | Example 31 | Example 32 | Example 33 | Example 34 | Example 35 | Example 36 | Example 37 |
|---|---|---|---|---|---|---|---|---|---|---|
| Characteristics | Spectral transmittance (380-1100nm) | [%] | 91.6 | 91.5 | 91.5 | 91.5 | 91.5 | 91.5 | 91.6 | 91.5 |
| | Coating film strength (tape peeling) | [Qualitative] | ◎ | ◎ | ◎ | ◎ | ◎ | ◎ | ◎ | ◎ |
| | Storage stability of liquid (gelling or not) | [Qualitative] | ○ | ○ | ○ | ○ | ○ | ○ | ○ | ○ |
| | Amount of increase in spectral transmittance | [%] | 3.0 | 2.9 | 2.9 | 2.9 | 2.9 | 2.9 | 3.0 | 2.9 |

[Table 1-4]

| | | | Example 38 | Example 39 | Example 40 | Example 41 | Example 42 | Example 43 | Example 44 |
|---|---|---|---|---|---|---|---|---|---|
| Inorganic fine particle dispersion | Inorganic fine particle | Type | Particle-1, 2 | Particle-1, 2 | Particle-1, 2 | Particle-1, 2 | Particle-1, 2 | Particle-1, 2 | Particle-1, 2 |
| | | Addition amount [wt%] | 2.59 | 2.59 | 2.59 | 2.59 | 3.59 | 3.59 | 4.51 |
| | | (Mass of inorganic fine particle Y) /[ (Mass of inorganic fine particle X)] + (Mass of inorganic fine particle Y)] [wt%/wt%] | 0.75 | 0.75 | 0.75 | 0.75 | 0.75 | 0.75 | 0.75 |
| | Liquid dispersion medium A | Type | Liquid A-16 | Liquid A-16 | Liquid A-16 | Liquid A-16 | Liquid A-16 | Liquid A-16 | Liquid A-16 |
| | | Addition amount [wt%] | 5.18 | 5.18 | 5.18 | 5.18 | 5.18 | 5.18 | 5.11 |
| | Liquid dispersion medium B | Type | Liquid B-1 | Liquid B-1 | Liquid B-1 | Liquid B-1 | Liquid B-1 | Liquid B-1 | Liquid B-1 |
| | | Addition amount [wt%] | 74.79 | 74.79 | 74.79 | 74.73 | 67.11 | 67.05 | 60.09 |
| | Water | Addition amount [wt%] | 16.80 | 16.80 | 16.80 | 16.80 | 23.32 | 23.32 | 29.29 |
| | Surfactant | Type | Component-1 | Component-1 | Component-1 | Component-1 | Component-1 | Component-1 | Component-1 |
| | | Addition amount [wt%] | 0.25 | 0.25 | 0.25 | 0.31 | 0.25 | 0.31 | 0.31 |
| | Component C and other components | Type | Component-4 | Component-4 | Component-4 | Component-4 | Component-4 | Component-4 | Component-4 |
| | | Addition amount [wt%] | 0.39 | 0.39 | 0.39 | 0.39 | 0.55 | 0.55 | 0.69 |
| | Total | [wt%] | 100.0 | 100.0 | 100.0 | 100.0 | 100.0 | 100.0 | 100.0 |
| Glass substrate | | Type | Base material-2 | Base material-2 | Base material-2 | Base material-2 | Base material-2 | Base material-2 | Base material-2 |

| | | | Example 38 | Example 39 | Example 40 | Example 41 | Example 42 | Example 43 | Example 44 |
|---|---|---|---|---|---|---|---|---|---|
| Characteristics | Spectral transmittance (380-1100nm) | [%] | 91.6 | 91.5 | 91.6 | 91.6 | 91.6 | 91.5 | 91.6 |
| | Coating film strength (tape peeling) | [Qualitative] | ◎ | ◎ | ◎ | ◎ | ◎ | ◎ | ◎ |
| | Storage stability of liquid (gelling or not) | [Qualitative] | ○ | ○ | ○ | ○ | ○ | ○ | ○ |
| | Amount of increase in spectral transmittance | [%] | 3.0 | 2.9 | 3.0 | 3.0 | 3.0 | 2.9 | 3.0 |

[Table 1-5]

| | | | Example 45 | Example 46 | Example 47 | Example 48 |
|---|---|---|---|---|---|---|
| Inorganic fine particle dispersion | Inorganic fine particle | Type | Particle-1, 2 | Particle-1, 2 | Particle-1, 2 | Particle-1, 2 |
| | | Addition amount [wt%] | 2.59 | 2.59 | 3.59 | 4.51 |
| | | (Mass of inorganic fine particle Y) /[(Mass of inorganic fine particle X)] + (Mass of inorganic fine particle Y)] [wt%/wt%] | 0.95 | 0.75 | 0.75 | 0.75 |
| | Liquid dispersion medium A | Type | Liquid A-16 | Liquid A-17 | Liquid A-17 | Liquid A-17 |
| | | Addition amount [wt%] | 5.18 | 2.59 | 2.59 | 2.58 |
| | Liquid dispersion medium B | Type | Liquid B-1 | Liquid B-1 | Liquid B-1 | Liquid B-1 |
| | | Addition amount [wt%] | 74.72 | 77.30 | 69.64 | 62.57 |
| | Water | Addition amount [wt%] | 16.81 | 16.83 | 23.32 | 29.35 |
| | Surfactant | Type | Component-1 | Component-1 | Component-1 | Component-1 |
| | | Addition amount [wt%] | 0.31 | 0.31 | 0.31 | 0.31 |
| | Component C and other components | Type | Component-4 | Component-4 | Component-4 | Component-4 |
| | | Addition amount [wt%] | 0.39 | 0.39 | 0.55 | 0.69 |
| | Total | [wt%] | 100.0 | 100.0 | 100.0 | 100.0 |
| Glass substrate | | Type | Base material-2 | Base material-2 | Base material-2 | Base material-2 |

(continued)

| | | | Example 45 | Example 46 | Example 47 | Example 48 |
|---|---|---|---|---|---|---|
| Characteristics | Spectral transmittance (380-1100nm) | [%] | 91.4 | 91.4 | 91.4 | 91.4 |
| | Coating film strength (tape peeling) | [Qualitative] | ◎ | ◎ | ◎ | ◎ |
| | Storage stability of liquid(gelling or not) | [Qualitative] | ○ | ○ | ○ | ○ |
| | Amount of increase in spectral transmittance | [%] | 2.8 | 2.8 | 2.8 | 2.8 |

Industrial Applicability

The present invention can provide an inorganic fine particle dispersion capable of forming a coating film having high light transmittance and high coating film strength (high adhesion of the coating film to a base material) with good storage stability.

The present invention can also provide a laminate having high light transmittance and high coating film strength (high adhesion of the coating film to a base material). Furthermore, the coating film of the present invention has a high hydrophilicity of the surface of the coating film due to a silanol group on silica contained in the coating film and also has an antifouling property in which dirt is washed off with water and rain. The coating film can be used as an antireflection film, an antifouling film, an antifogging film or the like and is suitably used for applications such as various housing equipment parts, various agricultural parts, various industrial parts, various building material parts, various parts for home appliances, and various automobile interior and exterior parts, including a wide variety of coatings and films such as an antireflection film and an antifouling film on the surface of a protective glass of a solar cell (solar cell cover glass), an antireflection film for a display, and an antifogging film for an agricultural film (plastic greenhouse). The coating film has high availability in various fields of industries such as building and construction industries, transportation equipment industries, electrical and electronic industries, and household goods.

**Claims**

1.　An inorganic fine particle dispersion comprising:

an inorganic fine particle,
a liquid dispersion medium A, excluding water, having a boiling point of 100°C or more and less than 190°C, and
a liquid dispersion medium B having a boiling point of less than 100°C,
wherein a content of the liquid dispersion medium A is 0.5% by mass or more and less than 15% by mass based on a total amount of the inorganic fine particle dispersion being 100% by mass.

2.　The inorganic fine particle dispersion according to claim 1, wherein a content of the liquid dispersion medium B is 20% by mass or more and 85% by mass or less based on the total amount of the inorganic fine particle dispersion being 100% by mass.

3.　The inorganic fine particle dispersion according to claim 1 or 2, wherein the liquid dispersion medium B is alcohol.

4.　The inorganic fine particle dispersion according to any one of claims 1 to 3, further comprising water.

5.　The inorganic fine particle dispersion according to claim 4, wherein a content of the water is 5% by mass or more and 55% by mass or less based on the total amount of the inorganic fine particle dispersion being 100% by mass.

6. The inorganic fine particle dispersion according to any one of claims 1 to 5, further comprising an alkoxysilane and/or a condensate thereof.

7. The inorganic fine particle dispersion according to any one of claims 1 to 5, further comprising one or more selected from the group consisting of alkoxysilane, an alkoxysilane condensate having a plurality of Si-O-Si bonds linearly connected, and an alkoxysilane condensate having a plurality of Si-O-Si bonds three-dimensionally connected.

8. The inorganic fine particle dispersion according to any one of claims 1 to 7, wherein the liquid dispersion medium A is alcohol.

9. The inorganic fine particle dispersion according to any one of claims 1 to 8, further comprising a surfactant.

10. The inorganic fine particle dispersion according to any one of claims 1 to 8, further comprising a surfactant comprising a polyether-modified siloxane.

11. The inorganic fine particle dispersion according to any one of claims 1 to 10, wherein the inorganic fine particle is colloidal silica.

12. The inorganic fine particle dispersion according to any one of claims 1 to 11, wherein a content of the inorganic fine particle is 0.1 % by mass or more and 10% by mass or less based on the total amount of the inorganic fine particle dispersion being 100% by mass.

13. A method for producing a laminate, comprising:

an application step of applying the inorganic fine particle dispersion according to any one of claims 1 to 12 onto a base material; and
a dispersion medium removal step of removing a liquid dispersion medium A and a liquid dispersion medium B from the inorganic fine particle dispersion applied onto the base material to form an inorganic fine particle layer on the base material.

14. The method for producing a laminate according to claim 13, further comprising a heat treatment step after the dispersion medium removal step.

15. A laminate comprising a base material and an inorganic fine particle layer, obtained by the method according to claim 13 or 14.

## INTERNATIONAL SEARCH REPORT

| International application No. |
| --- |
| **PCT/JP2022/013487** |

### A. CLASSIFICATION OF SUBJECT MATTER

*B32B 9/00*(2006.01)i; *C03C 17/22*(2006.01)i; *C03C 17/25*(2006.01)i; *C09D 183/02*(2006.01)i; *C09D 183/04*(2006.01)i; *C09D 201/00*(2006.01)i; *C09D 7/20*(2018.01)i; *C09D 7/61*(2018.01)i; *C09D 7/63*(2018.01)i; *C09D 7/65*(2018.01)i; *C09D 1/00*(2006.01)i

FI: C09D201/00; C03C17/22 Z; C09D7/20; C09D7/61; C03C17/25 A; C09D7/65; B32B9/00 A; C09D7/63; C09D183/02; C09D183/04; C09D1/00

According to International Patent Classification (IPC) or to both national classification and IPC

### B. FIELDS SEARCHED

Minimum documentation searched (classification system followed by classification symbols)

B32B9/00; C03C17/22; C03C17/25; C09D183/02; C09D183/04; C09D201/00; C09D7/20; C09D7/61; C09D7/63; C09D7/65; C09D1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/044838 A1 (JGC CATALYSTS & CHEMICALS LTD.) 07 March 2019 (2019-03-07) <br> claim 1, paragraphs [0092]-[0136], tables 1, 2, examples 1-10 | 1-15 |
| X | WO 2020/241745 A1 (IDEMITSU KOSAN CO., LTD.) 03 December 2020 (2020-12-03) <br> claims 1-2, 7, paragraphs [0114]-[0128], [0130], tables 1-4, examples 1-13 | 1-15 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 June 2022** | **14 June 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/013487**

| Patent document cited in search report | | | Publication date (day/month/year) | Patent family member(s) | Publication date (day/month/year) |
|---|---|---|---|---|---|
| WO | 2019/044838 | A1 | 07 March 2019 | US 2020/0181452 A1 claim 1, paragraphs [0138]-[0224], tables 1, 2, examples 1-10 | |
| WO | 2020/241745 | A1 | 03 December 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006327187 A

**Non-patent literature cited in the description**

- *Analytical Chemistry,* 1956, vol. 28, 1981-1983